# EUROPEAN PATENT APPLICATION

(11) **EP 4 541 521 A1**
(43) Date of publication of application: **23.04.2025**
(21) Application number: 24207552.1
(22) Date of filing: 18.10.2024
(51) Int. Cl.: B25J 9/16

(54) **AUTOMATED WORKPIECE TRANSFER SYSTEMS AND METHODS OF IMPLEMENTING THEREOF**

(30) Priority: 19.10.2023 US 202363591755 P
(71) Applicant: ATS Corporation, Cambridge, ON N3H 4R7 (CA)
(72) Inventor: Aikens, Stephen, Cambridge (CA); Stavnitzky, Jason Ernest, Cambridge (CA); Kleinikkink, Stanley Wellington, Cambridge (CA); Alexander, Calin-Adrian, Cambridge (CA); Murray, Dennis, Cambridge (CA)
(74) Representative: Herrmann, Daniel

(57) **Abstract**

Automated workpiece transfer systems and methods of implementing thereof are disclosed. The system includes an autonomous robot and a processor in communication with the robot. The autonomous robot includes a transfer component operable to transfer the workpieces to a picking area, one or more actuator components operable to increase a number of pickable workpieces transferred to the picking area according to a set of actuator operating commands; and an end-of-arm-tooling component operable to retrieve pickable workpieces from the picking area and to transfer the pickable workpieces to a receiving area. The processor is operable to apply a workpiece identification machine-learning model to an image to identify a reference workpiece type associated with the workpieces shown within the image; identify a set of reference operating commands associated with the reference workpiece type; and define the set of actuator operating commands based on the image and the set of reference operating commands.

## Description

This application claims the benefit of United States Provisional Patent Application No. 63/591,755 filed on October 19, 2023 entitled "Automated Workpiece Transfer Systems and Methods of Implementing Thereof'. The entirety of United States Provisional Patent Application No. 63/591,755 is incorporated herein by reference.

### Field

The described embodiments relate generally to automated workpiece transfer systems and methods of implementing thereof involving applying a machine-learning model to identify workpiece types.

### Background

Manufacturing processes can involve processing (e.g., assembling, fabricating, treating, refining, etc.) raw materials and/or parts of a product to produce products. Feeders are used within assembly lines to transfer workpieces to and/or between processing stations for processing. Often, parts are loaded in bulk to a feeder. Feeders can sort and divert individual workpieces and feed individual workpieces to the assembly line. Furthermore, some feeders may require the individual workpieces to be in a particular position and orientation in order to process the workpieces to the assembly lines.

### Summary

The various embodiments described herein generally relate to automated workpiece transfer systems and methods of implementing thereof. The system can include at least one autonomous robot and at least one processor in communication with the at least one autonomous robot. The at least one autonomous robot can include a transfer component, one or more actuator components and an end-of-arm-tooling component. The transfer component can be operable to transfer the one or more workpieces from a pre-processing area to a picking area according to a set of transfer operating commands. The one or more actuator components can be operable to increase a number of pickable workpieces transferred from the pre-processing area to the picking area according to a set of actuator operating commands. The end-of-arm-tooling component can be operable to retrieve one or more pickable workpieces from the picking area and to transfer the pickable workpieces to a receiving area. The at least one processor can be operable to: apply a workpiece identification machine-learning model to an initial image to identify at least one reference workpiece type associated with the one or more workpieces shown within the initial image, the one or more workpieces being within the pre-processing area; identify at least one set of reference operating commands associated with the at least one reference workpiece type; define the set of actuator operating commands for the one or more actuator components of the at least one autonomous robot based on the initial image and the at least one set of reference operating commands; and identify one or more pickable workpieces from the one or more workpieces transferred to the picking area shown within a subsequent image. The at least one set of reference operating commands can include one or more commands for operating an actuator component of the at least one autonomous robot to increase the number of pickable workpieces transferred to the picking area. The subsequent image can illustrate the one or more workpieces subsequent to the one or more actuator components being operated according to the set of actuator operating commands.

In some embodiments, the at least one set of reference operating commands can include two or more sets of reference operating commands.

In some embodiments, each set of reference operating commands of the two or more sets of reference operating commands can be associated with a different reference workpiece type.

In some embodiments, the at least one processor can be operable to: select one set of reference operating commands of the two or more sets of reference operating commands as an initial set of reference operating commands; and adapt the initial set of reference operating commands based on each unselected set of reference operating commands of the two or more sets of reference operating commands to define the set of actuator operating commands for the one or more actuator components of the at least one autonomous robot. The initial set of reference operating commands can be associated with a reference workpiece type most similar to the one or more workpieces within the pre-processing area

In some embodiments, the at least one processor can be operable to select the at least one reference workpiece type based on the reference workpiece type having at least one of a similar size, a similar shape, and a similar material as the one or more workpieces within the pre-processing area.

In some embodiments, the at least one processor can be operable to: determine a number of stable orientations for the one or more workpieces within the pre-processing area; and adapt the at least one set of reference commands associated with the at least one reference workpiece type based on the number of stable orientations for the one or more workpieces within the pre-processing area to define the set of actuator operating commands for the one or more actuator components of the at least one autonomous robot. Each stable orientation can be an orientation of the one or more workpiece in which the one or more workpieces is stable.

In some embodiments, the at least one processor can be operable to: determine a workpiece density for the one or more workpieces within the pre-processing area; and adapt the at least one set of reference operating commands associated with the at least one reference workpiece type based on the workpiece density of the one or more workpieces within the pre-processing area to define the set of actuator operating commands for the one or more actuator components of the at least one autonomous robot. The workpiece density can be representative of a ratio of a plan view area of the one or more workpieces within the pre-processing area to a plan view area of the pre-processing area.

In some embodiments, the at least one set of reference operating commands can include at least one of an amplitude or a frequency of an adjusting motion of the one or more actuator components; and the at least one processor can be operable to adapt one or more of the amplitude or the frequency of the adjusting motion of the one or more actuator components of the at least one set of reference operating commands to define the set of actuator operating commands for the one or more actuator components of the at least one autonomous robot.

In some embodiments, the at least one processor can be operable to identify each workpiece of the one or more workpieces as pickable or unpickable based on at least one of a position or an orientation of the workpiece.

In some embodiments, the at least one processor can be operable to: determine a pickable workpiece density for the one or more workpieces; and select the one or more actuator components from a plurality of actuator components of the at least one autonomous robot based on the pickable workpiece density. The pickable workpiece density can be representative of a ratio of a plan view area of one or more pickable workpieces to a plan view area of the pre-processing area.

In some embodiments, the at least one processor can be operable to: generate a workpiece map for the one or more workpieces, the workpiece map including a representation of each of the one or more workpieces loaded on the pre-processing area as an unpickable workpiece or a pickable workpiece; based on the workpiece map, determine whether a difference between a density of pickable workpieces of a portion of the pre-processing area and a density of pickable workpieces of another portion of the pre-processing area exceeds a pre-determined value; and in response to determining that the difference between the density of pickable workpieces of a portion of the pre-processing area and the density of pickable workpieces of another portion of the pre-processing area exceeds the pre-determined value: identify the portion of the pre-processing area having a lower pickable workpiece density as a region of interest; and define the set of actuator operating commands for the one or more actuator components of the at least one autonomous robot to increase the number of pickable workpieces within the region of interest of the pre-processing area.

In some embodiments, the at least one processor can be operable to, prior to the operating the transfer component of the at least one autonomous robot to transfer the one or more workpieces from the pre-processing area to the picking area: determine whether the number of pickable workpieces shown within an additional image is at least a pre-determined minimum number of pickable workpieces, the additional image illustrating the one or more workpieces subsequent to the one or more actuator components being operated according to the set of actuator operating commands; and in response to determining that the number of pickable workpieces is less than a pre-determined minimum number of pickable workpieces, define an additional set of actuator operating commands for the one or more actuator components of the at least one autonomous robot based on the additional image and the at least one set of reference operating commands associated with the at least one reference workpiece type; and the one or more actuator components are further operable according to the respective additional set of actuator operating commands to increase the number of pickable workpieces transferred to the picking area.

In some embodiments, the system can further include an imaging device operable to capture the initial image of the one or more workpieces within the pre-processing area. The imaging device can be operable to analyze captured images of the one or more workpieces within the processing area and/or the picking area, and visualize information including but not limited to: positions of pickable workpieces or unpickable workpieces, ratio distribution of orientation types of workpieces. The visualized information can be used by the system to adapt operating commands and/or displayed on a display device communicated. The imaging device can include a processing component.

In some embodiments, the one or more actuator components can be operable according to a set of pre-determined operating commands prior to the imaging device capturing the initial image.

In some embodiments, the at least one processor can be operable to apply a pickable workpiece identification machine learning model to the subsequent image to identify one or more pickable workpieces from the one or more workpieces.

In some embodiments, the transfer component of the at least one autonomous robot can be operable to transfer the one or more workpieces to the pre-processing area.

In some embodiments, the at least one processor can be operable to: identify at least one set of reference transfer operating commands associated with the at least one reference workpiece type; and define the set of transfer operating commands for the transfer component of the at least one autonomous robot based on the at least one set of reference transfer operating commands associated with the at least one reference workpiece type. The at least one set of reference operating commands can include one or more commands for operating the transfer component to yield a pre-determined workpiece density of workpieces on the picking area.

In some embodiments, the at least one set of reference transfer operating commands can include an operating speed and an operating duration of the transfer component; and the at least one processor can be operable to adapt one or more of the operating speed and the operating duration of the transfer component of the at least one set of reference transfer operating commands to define the set of transfer operating commands for the transfer component of the at least one autonomous robot.

In some embodiments, the at least one autonomous robot can include a pre-processing robot and at least one pick-and-place robot. The pre-processing robot can include the transfer component and the one or more actuator components. The at least one pick-and-place robot can include the end-of-arm-tooling component.

In accordance with another aspect, there is generally disclosed herein methods of operating an autonomous robot to transfer a plurality of workpieces. The at least one autonomous robot can be in communication with at least one processor. The method can involve operating the at least one processor to: apply a workpiece identification machine-learning model to an initial image to identify at least one reference workpiece type associated with one or more workpieces shown within the initial image, the one or more workpieces being within a pre-processing area; identify at least one set of reference operating commands associated with the at least one reference workpiece type; and define a set of actuator operating commands for one or more actuator components of the at least one autonomous robot based on the initial image and the at least one set of reference operating commands; operating the one or more actuator components according to the set of actuator operating commands to increase the number of pickable workpieces transferred to the picking area; operating a transfer component of the at least one autonomous robot according to a set of transfer operating commands to transfer the one or more workpieces from the pre-processing area to the picking area; operating the at least one processor to identify one or more pickable workpieces from the one or more workpieces transferred to the picking area shown within a subsequent image; and operating an end-of-arm-tooling component of the at least one autonomous robot to retrieve the one or more pickable workpieces from the picking area and to transfer the one or more pickable workpieces to a receiving area. The at least one set of reference operating commands can include one or more commands for operating an actuator component of the at least one autonomous robot to increase a number of pickable workpieces transferred to a picking area. The subsequent image can illustrate the one or more workpieces subsequent to the one or more actuator components being operated according to the set of actuator operating commands.

In some embodiments, the at least one set of reference operating commands can include two or more sets of reference operating commands.

In some embodiments, each set of reference operating commands of the two or more sets of reference operating commands can be associated with a different reference workpiece type.

In some embodiments, the method can involve operating the at least one processor to: select one set of reference operating commands of the two or more sets of reference operating commands as an initial set of reference operating commands; and adapt the initial set of reference operating commands based on each unselected set of reference operating commands of the two or more sets of reference operating commands to define the set of actuator operating commands for the one or more actuator components of the at least one autonomous robot. The initial set of reference operating commands can be associated with a reference workpiece type most similar to the one or more workpieces within the pre-processing area.

In some embodiments, the method can involve operating the at least one processor to select the at least one reference workpiece type based on the reference workpiece type having at least one of a similar size, a similar shape, and a similar material as the one or more workpieces within the pre-processing area.

In some embodiments, the method can involve operating the at least one processor to: determine a number of stable orientations for the one or more workpieces within the pre-processing area, each stable orientation can be an orientation of the one or more workpiece in which the one or more workpieces is stable; and adapt the at least one set of reference commands associated with the at least one reference workpiece type based on the number of stable orientations for the one or more workpieces within the pre-processing area to define the set of actuator operating commands for the one or more actuator components of the at least one autonomous robot.

In some embodiments, the method can involve operating the at least one processor to: determine a workpiece density for the one or more workpieces within the pre-processing area; and adapt the at least one set of reference operating commands associated with the at least one reference workpiece type based on the workpiece density of the one or more workpieces within the pre-processing area to define the set of actuator operating commands for the one or more actuator components of the at least one autonomous robot. The workpiece density can be representative of a ratio of a plan view area of the one or more workpieces within the pre-processing area to a plan view area of the pre-processing area.

In some embodiments, the at least one set of reference operating commands can include at least one of an amplitude or a frequency of an adjusting motion of the one or more actuator components; and the method can involve operating the at least one processor to adapt one or more of the amplitude or the frequency of the adjusting motion of the one or more actuator components of the at least one set of reference operating commands to define the set of actuator operating commands for the one or more actuator components of the at least one autonomous robot.

In some embodiments, the method can involve operating the at least one processor to identify each workpiece of the one or more workpieces as pickable or unpickable based on at least one of a position or an orientation of the workpiece.

In some embodiments, the method can involve operating the at least one processor to: determine a pickable workpiece density for the one or more workpieces; and select the one or more actuator components from a plurality of actuator components of the at least one autonomous robot based on the pickable workpiece density. The pickable workpiece density can be representative of a ratio of a plan view area of one or more pickable workpieces to a plan view area of the pre-processing area.

In some embodiments, the method can involve operating the at least one processor to: generate a workpiece map for the one or more workpieces, the workpiece map including a representation of each of the one or more workpieces loaded on the pre-processing area as an unpickable workpiece or a pickable workpiece; and based on the workpiece map, determine whether a difference between a density of pickable workpieces of a portion of the pre-processing area and a density of pickable workpieces of another portion of the pre-processing area exceeds a pre-determined value; and in response to determining that the difference between the density of pickable workpieces of a portion of the pre-processing area and the density of pickable workpieces of another portion of the pre-processing area exceeds the pre-determined value, operating the at least one processor to: identify the portion of the pre-processing area having a lower pickable workpiece density as a region of interest; and define the set of actuator operating commands for the one or more actuator components of the at least one autonomous robot to increase the number of pickable workpieces within the region of interest of the pre-processing area.

In some embodiments, the method can involve, prior to the operating the transfer component of the at least one autonomous robot to transfer the one or more workpieces from the pre-processing area to the picking area: operating the at least one processor to determine whether the number of pickable workpieces shown within an additional image is at least a pre-determined minimum number of pickable workpieces, the additional image illustrating the one or more workpieces subsequent to the one or more actuator components being operated according to the set of actuator operating commands; and in response to determining that the number of pickable workpieces is less than a pre-determined minimum number of pickable workpieces, operating the at least one processor to define an additional set of actuator operating commands for the one or more actuator components of the at least one autonomous robot based on the additional image and the at least one set of reference operating commands associated with the at least one reference workpiece type; and operating the one or more actuator components according to the respective additional set of actuator operating commands to increase the number of pickable workpieces transferred to the picking area.

In some embodiments, the method can involve capturing, by an imaging device, the initial image of the one or more workpieces within the pre-processing area.

In some embodiments, the method can involve, prior to capturing the initial image, operating the one or more actuator components according to a set of pre-determined operating commands.

In some embodiments, the method can involve operating the at least one processor to apply a pickable workpiece identification machine learning model to the subsequent image to identify the one or more pickable workpieces from the one or more workpieces.

In some embodiments, the method can involve operating the transfer component of the at least one autonomous robot to transfer the one or more workpieces to the pre-processing area.

In some embodiments, the method can involve operating the at least one processor to: identify at least one set of reference transfer operating commands associated with the at least one reference workpiece type; and define the set of transfer operating commands for the transfer component of the at least one autonomous robot based on the at least one set of reference transfer operating commands associated with the at least one reference workpiece type. The at least one set of reference operating commands can include one or more commands for operating the transfer component to yield a pre-determined workpiece density of workpieces on the picking area.

In some embodiments, the at least one set of reference transfer operating commands can include an operating speed and an operating duration of the transfer component; and the method can involve operating the at least one processor to adapt one or more of the operating speed and the operating duration of the transfer component of the at least one set of reference transfer operating commands to define the set of transfer operating commands for the transfer component of the at least one autonomous robot.

In some embodiments, the at least one autonomous robot can include a pre-processing robot and at least one pick-and-place robot. The pre-processing robot can include the transfer component and the one or more actuator components. The at least one pick-and-place robot can include the end-of-arm-tooling component.

In accordance with another aspect, there is generally disclosed herein systems to transfer a plurality of workpieces. The system can include at least one autonomous robot and at least one processor in communication with the at least one autonomous robot. The at least one autonomous robot can include a transfer component, and one or more actuator components. The transfer component can be operable to transfer the one or more workpieces from a pre-processing area to a picking area according to a set of transfer operating commands. The one or more actuator components can be operable to increase a number of pickable workpieces transferred from the pre-processing area to the picking area according to a set of actuator operating commands. The at least one processor can be operable to: identify at least one reference workpiece type associated with the one or more workpieces within the pre-processing area; identify at least one set of reference operating commands associated with the at least one reference workpiece type; and define the set of actuator operating commands for the one or more actuator components of the at least one autonomous robot based on an initial image showing the one or more workpieces within the pre-processing area and the at least one set of reference operating commands. The at least one set of reference operating commands can include one or more commands for operating an actuator component of the at least one autonomous robot to increase the number of pickable workpieces transferred to the picking area.

In some embodiments, the system can further include an end-of-arm-tooling component operable to retrieve one or more pickable workpieces from the picking area and to transfer the pickable workpieces to a receiving area; and the at least one processor can be operable to identify one or more pickable workpieces from the one or more workpieces transferred to the picking area shown within a subsequent image. The subsequent image can illustrate the one or more workpieces subsequent to the one or more actuator components being operated according to the set of actuator operating commands.

In some embodiments, the at least one processor can be operable to: select one set of reference operating commands of the two or more sets of reference operating commands as an initial set of reference operating commands; and adapt the initial set of reference operating commands based on each unselected set of reference operating commands of the two or more sets of reference operating commands to define the set of actuator operating commands for the one or more actuator components of the at least one autonomous robot. The initial set of reference operating commands can be associated with a reference workpiece type most similar to the one or more workpieces within the pre-processing area.

In some embodiments, the at least one processor can be operable to: determine an orientation associated with each workpiece of the one or more workpieces within the pre-processing area; and adapt the at least one set of reference operating commands associated with the at least one reference workpiece type based on the orientation associated with at least one workpiece of the one or more workpieces within the pre-processing area to define the set of actuator operating commands for the one or more actuator components of the at least one autonomous robot.

In some embodiments, the at least one set of reference operating commands can include at least one of an amplitude or a frequency of an adjusting motion of the one or more actuator components; and the at least one processor can be operable to adapt one or more of the amplitude or the frequency of the adjusting motion of the one or more actuator components of the at least one set of reference operating commands to define the set of actuator operating commands for the one or more actuator components of the at least one autonomous robot.

In some embodiments, the at least one processor can be operable to identify each workpiece of the one or more workpieces as pickable or unpickable based on at least one of a position or an orientation of the workpiece.

In some embodiments, the at least one processor can be operable to: determine a pickable workpiece density for the one or more workpieces; and select the one or more actuator components from a plurality of actuator components of the at least one autonomous robot based on the pickable workpiece density. The pickable workpiece density can be representative of a ratio of a plan view area of one or more pickable workpieces to a plan view area of the pre-processing area.

In some embodiments, the transfer component of the at least one autonomous robot can be operable to transfer the one or more workpieces to the pre-processing area.

In some embodiments, the at least one processor can be operable to: identify at least one set of reference transfer operating commands associated with the at least one reference workpiece type; and define the set of transfer operating commands for the transfer component of the at least one autonomous robot based on the at least one set of reference transfer operating commands associated with the at least one reference workpiece type. The at least one set of reference operating commands can include one or more commands for operating the transfer component to yield a pre-determined workpiece density of workpieces on the picking area.

In some embodiments, the at least one autonomous robot can include a pre-processing robot and at least one pick-and-place robot. The pre-processing robot can include the transfer component and the one or more actuator components. The at least one pick-and-place robot can include the end-of-arm-tooling component.

In accordance with another aspect, there is generally disclosed herein methods of operating an autonomous robot to transfer a plurality of workpieces. The at least one autonomous robot can be in communication with at least one processor. The method can involve operating the at least one processor to: identify at least one reference workpiece type for one or more workpieces within a pre-processing area; identify at least one set of reference operating commands associated with the at least one reference workpiece type; and define a set of actuator operating commands for one or more actuator components of the at least one autonomous robot based on an initial image showing the one or more workpieces within the pre-processing area and the at least one set of reference operating commands. The at least one set of reference operating commands can include one or more commands for increasing a number of pickable workpieces transferred to a picking area. The method can further involve operating the at least one autonomous robot according to the set of actuator operating commands to increase the number of pickable workpieces transferred to the picking area.

In some embodiments, the method can further involve operating the at least one processor to: identify one or more pickable workpieces from the one or more workpieces transferred to the picking area shown within a subsequent image; and retrieve the one or more pickable workpieces from the picking area and to transfer the one or more pickable workpieces to a receiving area. The subsequent image can illustrate the one or more workpieces subsequent to the at least one autonomous robot being operated according to the set of actuator operating commands.

In some embodiments, the method can involve capturing, by a first imaging device, the initial image of the one or more workpieces within the pre-processing area.

In some embodiments, the method can involve, prior to the operating the transfer component of the at least one autonomous robot to transfer the one or more workpieces from the pre-processing area to the picking area: operating the at least one processor to determine whether the number of pickable workpieces shown within an additional image is at least a pre-determined minimum number of pickable workpieces, the additional image illustrating the one or more workpieces subsequent to the one or more actuator components being operated according to the set of actuator operating commands; and in response to determining that the number of pickable workpieces is less than a pre-determined minimum number of pickable workpieces, operating the at least one processor to define an additional set of actuator operating commands for the one or more actuator components of the at least one autonomous robot based on the additional image and the at least one set of reference operating commands associated with the at least one reference workpiece type; and operating the one or more actuator components according to the respective additional set of actuator operating commands to increase the number of pickable workpieces transferred to the picking area.

In some embodiments, the method can involve capturing, by a first imaging device, the additional image of the one or more workpieces subsequent to the one or more actuator components being operated according to the set of actuator operating command.

In some embodiments, the method can involve capturing, by a second device, the subsequent image of one or more workpieces in the picking area subsequent to the at least one autonomous robot being operated according to the set of actuator operating commands.

In some embodiments, the method can involve operating the at least one processor to: select one set of reference operating commands of the two or more sets of reference operating commands as an initial set of reference operating commands; and adapt the initial set of reference operating commands based on each unselected set of reference operating commands of the two or more sets of reference operating commands to define the set of actuator operating commands for the one or more actuator components of the at least one autonomous robot. The initial set of reference operating commands can be associated with a reference workpiece type most similar to the one or more workpieces within the pre-processing area.

In some embodiments, the method can involve operating the at least one processor to: determine an orientation associated with each workpiece of the one or more workpieces within the pre-processing area; and adapt the at least one set of reference operating commands associated with the at least one reference workpiece type based on the orientation associated with at least one workpiece of the one or more workpieces within the pre-processing area to define the set of actuator operating commands for the one or more actuator components of the at least one autonomous robot.

In some embodiments, the at least one set of reference operating commands can include at least one of an amplitude or a frequency of an adjusting motion of the one or more actuator components; and the method can involve operating the at least one processor to adapt one or more of the amplitude or the frequency of the adjusting motion of the one or more actuator components of the at least one set of reference operating commands to define the set of actuator operating commands for the one or more actuator components of the at least one autonomous robot.

In some embodiments, the method can involve operating the at least one processor to identify each workpiece of the one or more workpieces as pickable or unpickable based on at least one of a position or an orientation of the workpiece.

In some embodiments, the method can involve operating the at least one process to apply a trained pattern match algorithm or a trained machine learning algorithm to identify each workpiece of the one or more workpieces as pickable or unpickable based on at least one of a position or an orientation of the workpiece.

In some embodiments, the method can involve operating the at least one processor to: determine a pickable workpiece density for the one or more workpieces; and select the one or more actuator components from a plurality of actuator components of the at least one autonomous robot based on the pickable workpiece density. The pickable workpiece density can be representative of a ratio of a plan view area of one or more pickable workpieces to a plan view area of the pre-processing area.

In some embodiments, the method can involve operating the transfer component of the at least one autonomous robot to transfer the one or more workpieces to the pre-processing area.

In some embodiments, the method can involve operating the at least one processor to: identify at least one set of reference transfer operating commands associated with the at least one reference workpiece type; and define the set of transfer operating commands for the transfer component of the at least one autonomous robot based on the at least one set of reference transfer operating commands associated with the at least one reference workpiece type. The at least one set of reference operating commands can include one or more commands for operating the transfer component to yield a pre-determined workpiece density of workpieces on the picking area.

In some embodiments, the at least one autonomous robot can include a pre-processing robot and at least one pick-and-place robot. The pre-processing robot can include the transfer component and the one or more actuator components. The at least one pick-and-place robot can include the end-of-arm-tooling component.

### Brief Description of the Drawings

Several embodiments will now be described in detail with reference to the drawings, in which:
FIG. 1 is a block diagram of example components of an example automated assembly line, in accordance with an example embodiment;
FIG. 2 is a block diagram of example components of an example workpiece processing station for the assembly line of FIG. 1, in accordance with an example embodiment;
FIG. 3 is a diagram of an example workpiece processing station having an autonomous pick-and-place robot, in accordance with an example embodiment;
FIG. 4 is a diagram of an example workpiece processing station having an autonomous pick-and-place robot, in accordance with another example embodiment;
FIG. 5 is a flowchart of an example method for operating at least one autonomous robot, in accordance with an example embodiment;
FIG. 6A is an illustration of an example orientation of an example workpiece;
FIG. 6B is an illustration of another example orientation of the example workpiece of FIG. 6A;
FIG. 6C is an illustration of another example orientation of the example workpiece of FIG. 6A;
FIG. 7A is an illustration of an example reference workpiece type for the example workpiece of FIG. 6A;
FIG. 7B is an illustration of another example reference workpiece type for the example workpiece of FIG. 6A;
FIG. 7C is an illustration of another example reference workpiece type for the example workpiece of FIG. 6A;
FIG. 8A is a diagram of an example workpiece map of one or more example workpieces within a pre-processing area of the assembly line of FIG. 1, in accordance with an example embodiment;
FIG. 8B is a diagram of an example workpiece map of the one or more example workpieces of FIG. 8A subsequent to an operation of an autonomous robot, in accordance with an example embodiment;
FIG. 8C is a diagram of an example workpiece map of the one or more example workpieces of FIG. 8B subsequent to another operation of the autonomous robot, in accordance with an example embodiment;
FIG. 9A is a diagram from a top plan view of one or more example workpieces within the assembly line of FIG. 1, in accordance with an example embodiment;
FIG. 9B is a diagram from a side view of an example actuator component of an autonomous robot operating on the one or more example workpieces of FIG. 9A;
FIG. 9C is a diagram from a side view of an example actuator component of the autonomous robot operating on the one or more example workpieces of FIG. 9A;
FIG. 9D is a diagram from a side view of an example actuator component of the autonomous robot operating on the one or more example workpieces of FIG. 9A;
FIG. 10 is an example heat map showing a distribution of workpieces in accordance with an example embodiment;
FIG. 11A is an example graph illustrating the distribution of the workpieces shown in FIG. 10 in accordance with an example embodiment; and
FIG. 11B is another example graph illustrating the distribution of the workpieces shown in FIG. 10 in accordance with an example embodiment.

The drawings, described below, are provided for purposes of illustration, and not of limitation, of the aspects and features of various examples of embodiments described herein. For simplicity and clarity of illustration, elements shown in the drawings have not necessarily been drawn to scale. The dimensions of some of the elements may be exaggerated relative to other elements for clarity. It will be appreciated that for simplicity and clarity of illustration, where considered appropriate, reference numerals may be repeated among the drawings to indicate corresponding or analogous elements or steps.

### Description of Example Embodiments

A wide variety of feeders can be used to sort and divert or load workpieces to an assembly line. For example, some feeders can use vibratory, centrifugal, or pneumatic force to sort workpieces. However, such feeders require a high degree of customization and are often tailored to the properties of the workpiece that they intended to process, such as but not limited to, the shape, size, or material of the workpiece. The term "workpiece" used herein refers to a part or a partially-finished product. The engineering, procurement, and installation of such feeders can result in a significant cost and time constraint in the deployment of an automated assembly line.

Some feeders, such as flex feeders, include actuator components that can be configured to adjust the position or orientation of workpieces, retrieve the workpieces, and place the workpieces in a desired position and orientation, such as in the assembly line. Such feeders can be reconfigured to process different workpieces and different desired positions and orientations. While such feeders can be multi-purposed, reconfiguring such feeders to process workpieces with different properties can require significant manual effort. As well, such feeders can have limited processing rates in respect of the workpieces.

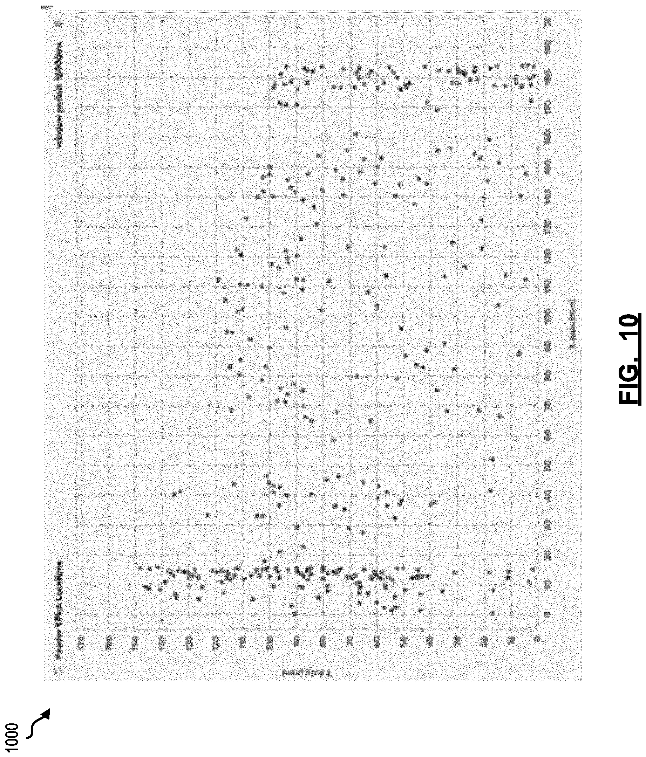

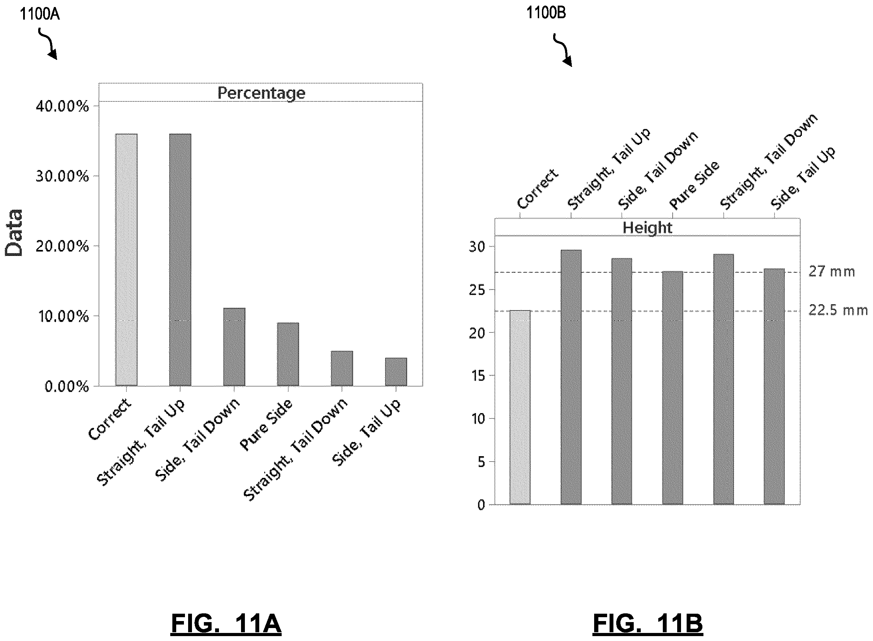

Generally, a primary goal of an optimized feeder, such as a flex feeder, is the overall output of placed good parts. A secondary goal (which is highly related to producing the primary goal) is the number of pickable parts for each part presentation. A part presentation can be defined as an event that brings new, or newly disturbed old parts into the field of view of the pick camera. Examples can include a conveyor index, a feed module shaker (e.g., modules that shake, vibrate, bump, index, accelerate and/or otherwise disturb parts to change their current seated configuration)- anything that renews the pick field to potentially turn some incorrect parts to being pickable, or purge out incorrect parts and bring in new ones (some of which are hopefully pickable). FIG. 10 shows an example heat map 1000 of a distribution of workpieces. In the distribution of workpieces of FIG. 10, it can be seen that there are fewer parts within the center of the picking area and so, the disclosed systems and methods can determine that the part presentation profile can be appropriate for an actuator component that reaches more widespread across the picking area, such as a paddle wheel, which does not focus on one area. In another example, FIG. 11A shows a graph 1100A of a distribution of the workpieces based on orientation. Orientation (e.g., up or down, etc.) can be a critical criteria for determining pickability. Another example criteria for pickability can be amount of a "clear zone" - that is, is there enough room around the correct part to pick it with your end-of-arm tool without contacting other parts. This is critical as inadvertent contact could potentially damage them, or turn a pickable part into an unpickable part. FIG. 11B shows an example graph 1100B based on height of each configuration. As shown, the workpieces in the correct configuration also are the shortest, the disclosed methods and systems can determine that an actuator component positioned at a certain distance from the picking area can be appropriate, such as a paddle wheel with a blade spaced roughly 25 mm from the picking area. This would allow correct workpieces through, untouched, but direct all incorrect workpieces back, with a chance that some of them would be correct the next time.

Disclosed herein are systems and methods for operating at least one autonomous robot. For example, the disclosed systems and methods can involve operating a processor to apply a workpiece identification machine-learning model to an initial image to identify at least one reference workpiece type associated with one or more workpieces shown within the initial image, the one or more workpieces being within a pre-processing area; identify at least one set of reference operating commands associated with the at least one reference workpiece type, the at least one set of reference operating commands including one or more commands for operating an actuator component of the at least one autonomous robot to increase a number of pickable workpieces transferred to a picking area; and define a set of actuator operating commands for one or more actuator components of the at least one autonomous robot based on the initial image and the at least one set of reference operating commands. The disclosed systems and methods also involve operating the one or more actuator components according to the set of actuator operating commands to increase the number of pickable workpieces transferred to the picking area; operating a transfer component of the at least one autonomous robot to transfer the one or more workpieces from the pre-processing area to the picking area according to a set of transfer operating commands; operating the at least one processor to identify one or more pickable workpieces from the one or more workpieces transferred to the picking area shown within a subsequent image, the subsequent image illustrating the one or more workpieces subsequent to the one or more actuator components being operated according to the set of actuator operating commands; and operating an end-of-arm-tooling component of the at least one autonomous robot to retrieve the one or more pickable workpieces from the picking area and to transfer the one or more pickable workpieces to a receiving area.

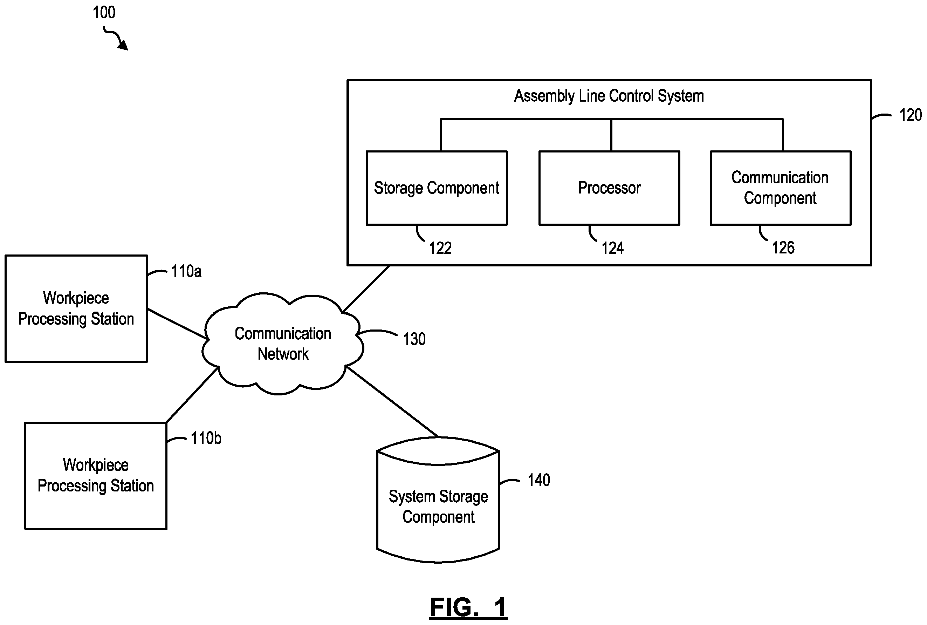

Referring now to FIG. 1, shown therein a block diagram illustrating an example automated assembly line 100. The automated assembly line 100 can include one or more workpiece processing stations 110, an assembly line control system 120, a communication network 130, and a system storage component 140. Although only two workpiece processing stations 110a, 110b are shown in FIG. 1, the automated assembly line 100 can include fewer or more workpiece processing stations 110.

The assembly line control system 120 can operate to control and/or monitor the operation of the workpiece processing stations 110. The assembly line control system 120 can include control interfaces that allow a user to electronically configure the automated assembly line 100. In some embodiments, the assembly line control system 120 can select control parameters for the workpiece processing stations 110. The control parameters can be determined by the assembly line control system 120. As shown in FIG. 1, the assembly line control system 120 includes an assembly line storage component 122, an assembly line processor 124, and an assembly line communication component 126.

The assembly line storage component 122 can include RAM, ROM, one or more hard drives, one or more flash drives or some other suitable data storage elements such as disk drives. For example, the assembly line storage component 122 can include volatile and non-volatile memory. Non-volatile memory can store computer programs consisting of computer-executable instructions, which can be loaded into the volatile memory for execution by the assembly line processor 124. Operating the assembly line processor 124 to carry out a function can involve executing instructions (e.g., a software program) that can be stored in the assembly line storage component 122 and/or transmitting or receiving inputs and outputs via the assembly line communication component 126. The assembly line storage component 122 can also store data input to, or output from, the assembly line processor 124, which can result from the course of executing the computer-executable instructions for example.

The assembly line storage component 122 can include one or more databases for storing data related to the automated assembly line 100. The assembly line storage component 122 can store data in respect of the operation of the automated assembly line 100, such as data in respect of the workpiece processing stations 110.

For example, the assembly line storage component 122 can store data received from the workpiece processing stations 110, property data in respect of each of the workpiece processing stations 110, property data in respect of the workpieces, etc. The assembly line storage component 122 can also store software applications executable by the assembly line processor 124 to facilitate communication between the assembly line control system 120 and the workpiece processing stations 110, and configuration of the workpiece processing stations 110.

In some embodiments, the assembly line storage component 122 can instead be the system storage component 140, which can be accessible via the communication network 130.

In some embodiments, the assembly line storage component 122 can store data that is more current based on the operation of the assembly line control system 120, and the system storage component 140 can store data that is considered by the assembly line control system 120 to unlikely be used in the immediate future. For example, the assembly line storage component 122 can store operating data and workpiece processing property data only for the workpiece processing stations 110 operating during a certain production run or day, whereas the system storage component 140 can store the data for all workpiece processing stations 110, which is typically infrequently changed. In some embodiments, the system storage component 140 can be a remote data storage accessible via the network.

The assembly line processor 124 can control the operation of the assembly line control system 120. The assembly line processor 124 can include any suitable processors, controllers, digital signal processors, graphics processing units, application specific integrated circuits (ASICs), field programmable gate arrays (FPGAs), microcontrollers, and/or other suitably programmed or programmable logic circuits that can provide sufficient processing power depending on the configuration, purposes and requirements of the assembly line control system 120. In some embodiments, the assembly line processor 124 can include more than one processor with each processor being configured to perform different dedicated tasks. The assembly line processor 124 together with the processor at the workpiece processing stations 110 contribute to the control of the automated assembly line 100.

The assembly line communication component 126 can include any interface that enables the assembly line control system 120 to communicate with various devices and other systems. For example, the assembly line communication component 126 can facilitate communication with the other components of the automated assembly line 100, such as the workpiece processing stations 110 and the system storage component 140 via the communication network 130.

In some embodiments, the assembly line communication component 126 can include at least one of a serial port, a parallel port or a USB port. The assembly line communication component 126 may also include a wireless transmitter, receiver, or transceiver for communicating with a wireless communications network, such as the communication network 130. The wireless communications network can include at least one of an Internet, Local Area Network (LAN), Ethernet, Firewire, modem, fiber, or digital subscriber line connection. Various combinations of these elements may be incorporated within the assembly line communication component 126. For example, the assembly line communication component 126 may receive input from various input devices, such as a mouse, a keyboard, a touch screen, a thumbwheel, a track-pad, a track-ball, a card-reader, voice recognition software and the like depending on the requirements and implementation of the assembly line control system 120.

The communication network 130 can include any network capable of carrying data, including the Internet, Ethernet, plain old telephone service (POTS) line, public switch telephone network (PSTN), integrated services digital network (ISDN), digital subscriber line (DSL), coaxial cable, fiber optics, satellite, mobile, wireless (e.g. Wi-Fi, WiMAX^{™}), Signaling System No. 7 (SS7) signaling network, fixed line, local area network, wide area network, and others, including any combination of these, capable of interfacing with, and enabling communication between the assembly line control system 120, the workpiece processing stations 110, and/or the system storage component 140.

In some embodiments, the workpiece processing stations 110 can communicate with other workpiece processing stations 110 via the communication network 130. In some embodiments, the workpiece processing stations 110 can communicate with other workpiece processing stations 110 directly via onboard communication components. For example, each workpiece processing station 110 and the assembly line control system 120 may be equipped with a wireless communication interface to enable wireless communications according to a Wi-Fi protocol (e.g., IEEE 802.11 protocol or similar).

Similar to the assembly line storage component 122, the system storage component 140 can include RAM, ROM, one or more hard drives, one or more flash drives or some other suitable data storage elements such as disk drives. Similar to the assembly line storage component 122, the system storage component 140 can store data in respect of the automated assembly line 100 and/or the workpiece processing stations 110, including operating data, profile data (e.g., servo-motor profile data), motion data with which the workpiece processing stations 110 operate (e.g., tool motion data), data in respect of products that the automated production station can produce, data in respect of workpieces that may be used to produce the products.

Profile data, motion data, product data, and workpiece data can be stored in the system storage component 140 for subsequent retrieval by the workpiece processing stations 110. The workpiece processing stations 110 can download motion data, product data, and workpiece data from the system storage component 140 via the communication network 130, for example.

Profile data and motion data can be generated for the workpiece processing stations 110. For example, tables representing the profile data and motion data of tools of the workpiece processing stations 110 can be imported and form the basis for the profile data and motion data, respectively. In another example, the assembly line control system 120 can generate the motion data based on data collected by the workpiece processing station 110.

In some embodiments, operating data can be stored in the system storage component 140, and the operating data can be retrieved by the assembly line control system 120 when needed. The assembly line control system 120 can download the operating data from the system storage component 140 via the communication network 130. Example operating data can include, but not limited to, a current position of one or more tooling of the workpiece processing station 110, a current speed of one or more tooling of the workpiece processing station 110, a current velocity of one or more tooling of the workpiece processing station 110, and a current acceleration of one or more tooling of the workpiece processing station 110. In some embodiments, the operating data, or at least some of the operating data, can be stored in the assembly line storage component 122.

In some embodiments, one or more computing devices (not shown in FIG. 1) can communicate with the automated assembly line 100 via the communication network 130. A user may electronically configure the automated assembly line 100 using the computing device. The computing device can include any device capable of communication with other devices through a network such as communication network 130. The computing device can include a processor and memory, and may be an electronic tablet device, a personal computer, workstation, server, portable computer, mobile device, personal digital assistant, laptop, smart phone, Wireless Application Protocol (WAP) phone, an interactive television, video display terminals, gaming consoles, and portable electronic devices or any combination of these.

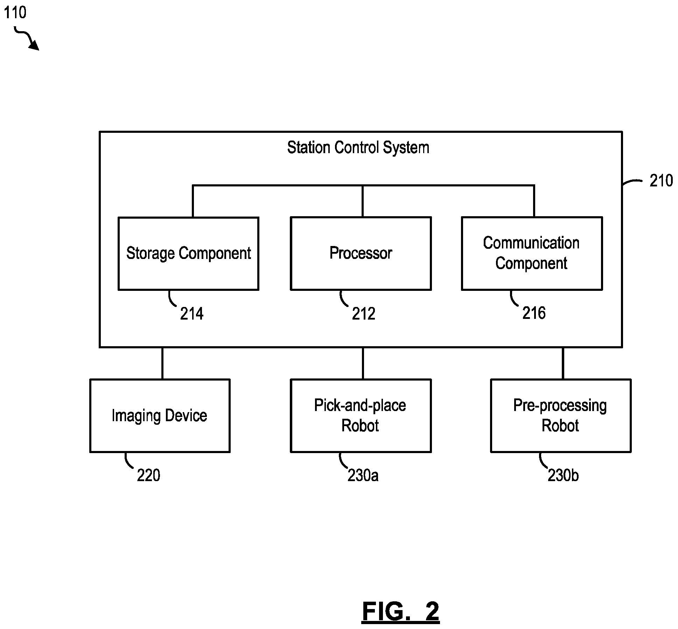

Referring now to FIG. 2, shown therein a block diagram of example components of an example workpiece processing station 110. The example workpiece processing station 110 can be workpiece processing stations 110a, 110b of the automated assembly line 100. The workpiece processing station 110 includes a station control system 210, an imaging device 220, an autonomous pick-and-place robot 230a, and an autonomous pre-processing robot 230b. The station control system 210 can include a station processor 212, a station storage component (or memory) 214, and a station communication component 216.

Components 210, 212, 214, 216, 220, 230a, and 230b are illustrated separately in FIG. 2. In some embodiments, one or more of the components 210, 212, 214, 216, 220, 230a, and 230b can be combined into fewer components, or separated into further components. For example, the pick-and-place robot 230a can be combined with the pre-processing robot 230b. In some embodiments, parts of a component can be combined with another part of another component.

The station control system 210 can facilitate the operation of the workpiece processing station 110. The station control system 210 can include control interfaces that allow a user to electronically configure the workpiece processing station 110. The station control system 210 can collect and store operating data of the workpiece processing station 110 in the station storage component 214.

The station processor 212 can control the operation of the workpiece processing station 110. The station processor 212 can include any suitable processors, controllers, digital signal processors, graphics processing units, application specific integrated circuits (ASICs), field programmable gate arrays (FPGAs), microcontrollers, and/or other suitably programmed or programmable logic circuits that can provide sufficient processing power depending on the configuration, purposes and requirements of the workpiece processing station 110. In some embodiments, the station processor 212 can include more than one processor with each processor being configured to perform different dedicated tasks.

The station processor 212 can operate the station storage component 214, the station communication component 216, the imaging device 220, the pick-and-place robot 230a, and the pre-processing robot 230b. For example, the station processor 212 can identify a reference workpiece type associated with one or more workpieces shown within an image. In some embodiments, the image can be captured by the imaging device 220. A reference workpiece type can be defined as a workpiece having at least one property similar to the one or more workpieces shown within the image. A property of a workpiece can relate to a quality and/or a feature of the workpiece, such as but not limited to, its shape, size, material, surface, or structure.

The station processor 212 can also define operating commands for various components of the pick-and-place robot 230a and/or the pre-processing robot 230b. For example, the station processor 212 can define operating commands for one or more actuator components to increase the number of pickable workpieces transferred to the picking area, operating commands for a transfer component to transfer workpieces from a pre-processing area to the picking area, and operating commands for an end-of-arm tooling component to retrieve pickable workpieces from the picking area and to transfer the pickable workpieces to a receiving area. In some embodiments, the station processor 212 can apply machine learning models, such as the examples disclosed herein, to optimize one or more upstream operations to increase the availability of more pickable workpieces at the picking area. Different machine learning models can be applied to image analysis and sensor measurements (i.e. determining the pose or configuration of a workpiece) than the machine learning model applied to determine the commands to give to the actuators to improve the number of pickable parts. For example, with a machine learning model generated from prior images, the station processor 212 can determine that there is often a higher density of workpieces at certain areas within a pre-processing area and/or a picking area. From this, the station processor 212 can adapt the operation of one or more upstream components to increase the overall pickability based at least on this density information, such as adapting the components to spread out the density of workpieces. In some embodiments, the station processor 212 can define operating commands based on reference operating commands for reference workpiece types.

For another example, the station processor 212 can identify pickable workpieces from images. In some embodiments, the images can be captured by the imaging device 220. In some embodiments, the images can be captured at the pre-processing area and/or the picking area.

A pickable workpiece at a picking area can be defined as a workpiece that is suitable for retrieval by the pick-and-place robot 230a. In some embodiments, an unpickable workpiece at the picking area can correspond to a workpiece that is unsuitable for retrieval by the pick-and-place robot 230a.

A pickable workpiece at a pre-processing area can be defined as a workpiece that would likely be pickable at the picking area after transfer by the pre-processing robot 230b. In some embodiments, an unpickable workpiece at the pre-processing area can correspond to a workpiece that is unlikely to be pickable at the picking area after transfer by the pre-processing robot 230b.

The pickability of a workpiece at the picking area or the pre-processing area can be quantified, in some embodiments. The pickability of a workpiece can be based on, but is not limited to, a position of the workpiece and/or an orientation of the workpiece. The pickability of a workpiece can be based on one or more properties of the workpiece.

The station processor 212 can operate the pre-processing robot 230b to increase a number of workpieces that are identified as being pickable by adjusting the position or orientation of one or more workpieces in the pre-processing area prior to transferring the one or more workpieces to the picking area. The station processor 212 can also operate the pick-and-place robot 230a to retrieve a workpiece from the picking area that is identified as being pickable. The operation of the station processor 212 can be based on data collected from the imaging device 220, the station storage component 214, the station communication component 216, the pick-and-place robot 230a, and/or the pre-processing robot 230b, in some embodiments.

The station storage component 214 can include RAM, ROM, one or more hard drives, one or more flash drives or some other suitable data storage elements such as disk drives. For example, the station storage component 214 can include volatile and non-volatile memory. Non-volatile memory can store computer programs consisting of computer-executable instructions, which can be loaded into the volatile memory for execution by the station processor 212. Operating the station processor 212 to carry out a function can involve executing instructions (e.g., a software program) that can be stored in the station storage component 214 and/or transmitting or receiving inputs and outputs via the station communication component 216. The station storage component 214 can also store data input to, or output from, the station processor 212, which can result from the course of executing the computer-executable instructions for example.

The station storage component 214 can include one or more databases for storing data related to the workpiece processing station 110. The station storage component 214 can store data to be used during the operation of the workpiece processing station 110 and/or to facilitate the operation of the workpiece processing station 110. Example data can include property and/or operating data in respect of the workpiece processing station 110, and property data in respect of workpieces, or the product etc. The station storage component 214 can store data tables, data processing algorithms (e.g., image processing algorithms), as well as other data and/or operating instructions which can be used by the station processor 212. The station processor 212 can each operate to process data received from the imaging device 220 and/or the assembly line control system 120.

In some embodiments, the station storage component 214 can store data that is more current based on the operation of the workpiece processing station 110, and the system storage component 140 and/or the assembly line storage component 122 can store data that is considered by the workpiece processing station 110 to unlikely be used in the immediate future. For example, the station storage component 214 can store operating data and workpiece processing property data only for the workpiece processing station 110 operating during a certain production run or day.

The station communication component 216 can include any interface that enables the workpiece processing station 110 to communicate with various devices and other systems. For example, the station communication component 216 can facilitate communication with the other components of the automated assembly line 100, such as the assembly line control system 120, other workpiece processing stations 110 (e.g., another workpiece processing station 110 operating within the automated assembly line 100), and the system storage component 140 via the communication network 130. For example, the station communication component 216 can receive commands and/or data from the assembly line control system 120 and/or another workpiece processing station 110 (e.g., another workpiece processing station 110 operating within the automated assembly line 100).

In some embodiments, the station communication component 216 can include at least one of a serial port, a parallel port or a USB port. The station communication component 216 may also include a wireless transmitter, receiver, or transceiver for communicating with a wireless communications network, such as the communication network 130. The wireless communications network can include at least one of an Internet, Local Area Network (LAN), Ethernet, FireWire^{™}, modem, fiber, or digital subscriber line connection. Various combinations of these elements may be incorporated within the station communication component 216. For example, the station communication component 216 may receive input from various input devices, such as a mouse, a keyboard, a touch screen, a thumbwheel, a track-pad, a track-ball, a card-reader, voice recognition software and the like depending on the requirements and implementation of the workpiece processing station 110.

The imaging device 220 can capture images of a pre-processing area and/or a picking area. One or more workpieces can be within the pre-processing area and the imaging device 220 can capture an image of the one or more workpieces in the pre-processing area. Subsequently, the one or more workpieces can be transferred to the picking area and the imaging device 220 can capture a subsequent image of the one or more workpieces in the picking area.

The imaging device 220 can include optical sensors or imaging sensors, such as photographic and/or video cameras and systems (e.g., stereo vision, high speed cameras), laser scanners, etc. Although only one imaging device 220 is shown in FIG. 2, the workpiece processing station 110 can include more imaging devices 220. In addition to imaging device 220, the workpiece processing station 110 can include other sensor devices to capture data in respect of the workpieces.

The imaging device 220 can be calibrated. For example, the lens of the imaging device 220 may introduce distortions in the image. Accordingly, the imaging device 220 can be calibrated to adjust the focus, aperture, and exposure. As well, the height of the imaging device 220 can be adjusted to adjust the scale of the image.

The workpiece processing station 110 can include one or more lighting components to provide lighting to the picking area. The lighting type and lighting intensity can be adjusted to modify the image settings.

The workpiece processing station 110 can be equipped with at least one autonomous robot, such as but not limited to the pick-and-place robot 230a and the pre-processing robot 230b (herein collectively referred to as autonomous robots 230), for adjusting one or more workpieces, transferring the workpieces, and retrieving the workpieces. In some embodiments, the autonomous robot 230 can include one or more actuator components, such as but not limited to vibratory mechanisms, diverting mechanisms, skimming mechanisms, blower mechanisms, suction or vacuum mechanisms, paddle mechanisms, magnetic mechanisms, transfer components, such as but not limited to dial-based feeders, bowl feeders, vibratory feeders, linear feeders or conveyors (e.g., flat bed conveyors, pallet conveyors with pocket bottoms, pallet conveyors with flat bottoms, shuttles with trays), hoppers, and/or shaker trays, end-of-arm-tooling components such but not limited to grippers including parallel grippers, O-ring grippers, etc.., and/or purge mechanisms.

In some embodiments, the autonomous pre-processing robot 230b can include the one or more actuator components that can reposition or reorient workpieces before transfer to the picking area. In some embodiments, the autonomous pre-processing robot 230b can include the one or more transfer components that can transfer workpieces from a pre-processing area to the picking area. In some embodiments, the autonomous pick-and-place robot 230a can include the end-of-arm-tooling components that can retrieve workpieces from a picking area for processing. In some embodiments, the autonomous pick-and-place robot 230a can also include purge mechanisms that can remove unprocessed workpieces from the picking area. The operation of the autonomous robots 230 can be controlled by the station control system 210 and with consideration of the images captured by the imaging device 220. Prior to operation of the autonomous robots 230, the autonomous robots 230 can be calibrated to align the reference frame of the autonomous robots 230 with the reference frame of the imaging device 220.

In some embodiments, the autonomous pick-and-place robot 230a and/or the autonomous pre-processing robot 230b can each include one or more dedicated processors. In some embodiments, the operation of the autonomous pick-and-place robot 230a and/or the autonomous pre-processing robot 230b, such as the one or more actuator components, the one or more transfer components, the end-of-arm-tooling components, and/or the purge mechanisms can be controlled by the station processor 212. In some embodiments, the one or more actuator components, the one or more transfer components, the end-of-arm-tooling components, and/or the purge mechanisms can be located separately from one another and may not be mounted together.

The workpiece processing station 110 can receive control parameters from the assembly line control system 120, a control interface, or an external system. Based on the control parameters, the station control system 210 can operate the workpiece processing station 110 to process workpieces.

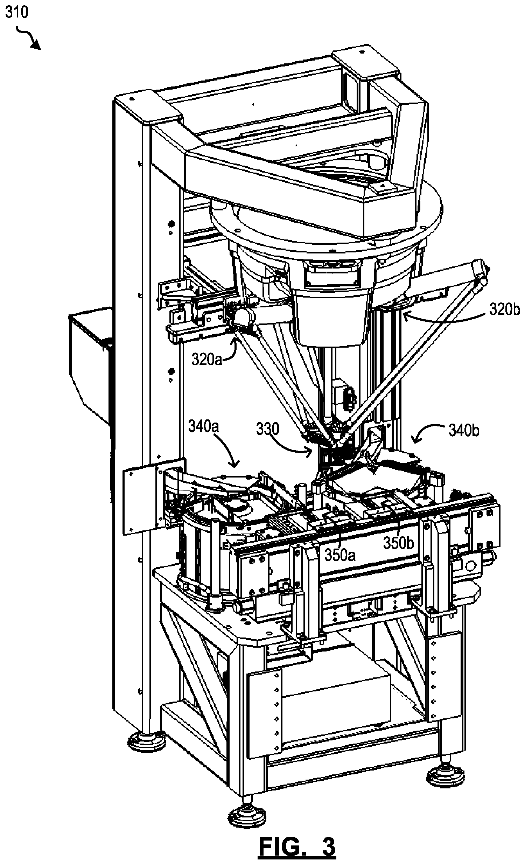

Referring now to FIG. 3, shown therein is a diagram of an example workpiece processing station 310. The workpiece processing station 310 shown in FIG. 3 can act as a feeder for retrieving workpieces from a picking area and transferring the workpieces to receiving areas 350a, 350b. The workpiece processing station 310 can include an autonomous robot 330, imaging devices 320a, 320b, and picking areas 340a, 340b mounted thereon. Similar to the workpiece processing station 110 of FIG. 2, the workpiece processing station 310 includes a station control system (not shown in FIG. 3). The workpiece processing station 310 also includes one or more pre-processing areas (not shown in FIG. 3).

Although only one autonomous robot 330 is shown in FIG. 3, the workpiece processing station 310 can include more autonomous robots 330. Furthermore, the autonomous robot 330 shown in FIG. 3 is a pick-and-place robot similar to the pick-and-place robot 230a. However, the workpiece processing station 310 can also include one or more pre-processing robots (not shown), similar to the pre-processing robot 230b. As well, although two imaging devices 320a, 320b and two picking areas 340a, 340b are shown in FIG. 3, the workpiece processing station 310 can include fewer or more imaging devices 320 and/or fewer or more picking areas 340.

In some embodiments, workpieces can be within the one or more pre-processing areas after being delivered by various transfer components. The autonomous robot 330 can include transfer components (not shown in FIG. 3) to transfer workpieces from a pre-processing area to the picking areas 340. The transfer components can be operable according to a set of transfer operating commands. The imaging device 320 can capture images of the pre-processing area. The processor 212 can identify workpieces loaded on the pre-processing areas that are likely to be pickable after transfer to the picking area 340 based on the images.

The autonomous robot 330 can include actuator components (not shown in FIG. 3). For example, the actuator components can vibrate, spin, or blow air to reposition or reorient workpieces loaded on the pre-processing area. The actuator components can be operable according to a set of actuator operating commands.

The processor 212 can identify at least one reference workpiece type associated with one or more workpieces loaded on the pre-processing area shown within the images. The processor 212 can identify at least one set of reference operating parameters associated with the at least one reference workpiece type for operating the actuator component of the autonomous robot 330 to increase a number of pickable workpieces transferred to the picking area 340a, 340b. Based on the set of reference operating parameters and the image of the pre-processing area captured by the imaging device 320a, 320b, the processor 212 can define a set of actuator operating parameters for operating an actuator component of the autonomous robot 330 to sort or adjust workpieces loaded on the pre-processing area until they are likely to be pickable after transfer to the picking area 340. That is, the processor 212 can define the set of actuator operating parameters for operating an actuator component of the autonomous robot 330 to increase a number of pickable workpieces transferred to the picking area 340a, 340b.

In some embodiments, the autonomous robot 330 can include a plurality of actuator components. The processor 212 can select an actuator component of the plurality of actuator components to use for increasing the number of pickable workpieces transferred to the picking areas 340a, 340b. For example, the processor 212 can, based on the reference workpiece type, and select an appropriate actuator component for increasing the number of pickable workpieces transferred to the picking areas 340a, 340b. In another example, the processor 212 can, based on the image of the pre-processing area captured by the imaging device 320a, 320b, select an appropriate actuator component for increasing the number of pickable workpieces transferred to the picking areas 340a, 340b.

When the workpieces are within each of the picking areas 340, the imaging device 320a can capture images of the picking area 340a while the imaging device 320b can capture images of the picking area 340b. The processor 212 can identify workpieces loaded on the picking area that are pickable based on the images. The processor 212 can operate the end-of-arm-tooling component of the autonomous robot 330 to retrieve workpieces from each of the picking areas 340a, 340b.

In some embodiments, the autonomous robot 330 can include a plurality of end-of-arm-tooling components. The processor 212 can select an end-of-arm-tooling component of the plurality of end-of-arm-tooling components to use for retrieving the workpieces. For example, the processor 212 can, based on the image captured by the imaging device 320b, identify workpieces and select an appropriate end-of-arm-tooling component for retrieving the workpieces from the picking area.

As shown in FIG. 3, the picking areas 340 can include, but is not limited to, dial-based feeders, bowl feeders, vibratory feeders, linear feeders or conveyors (e.g., flat bed conveyors, pallet conveyors with pocket bottoms, pallet conveyors with flat bottoms, shuttles with trays), hoppers, and/or shaker trays.

The positions of the components 320a, 320b, 330, 340a, 340b of the workpiece processing station 310 is shown for illustrative purposes and are not limited to the illustrated positions. Other configurations of the components 320a, 320b, 330, 340a, 340b can be used depending on the application of the workpiece processing station 310 and/or the environment in which the workpiece processing station 310 will be used. For example, the picking areas 340 can be stacked (which offers a smaller footprint but requires a longer pick height for one picking area) or concentric (which requires a longer stroke for one picking area) instead of adjacent.

As shown in FIG. 3, the receiving areas 350 can include, but is not limited to, a conveyor (e.g., flat bed conveyors, pallet conveyors with pocket bottoms, pallet conveyors with flat bottoms, shuttles with trays). The workpieces can be transferred from the receiving areas 350 to another workpiece processing station 310 for further processing. In some embodiments, the receiving areas 350 can include one or more imaging devices to capture images of the one or more workpieces within the receiving areas 350. Although two receiving areas 350a, 350b are shown in FIG. 3, the workpiece processing station 310 can transfer workpieces to fewer or more receiving areas 350.

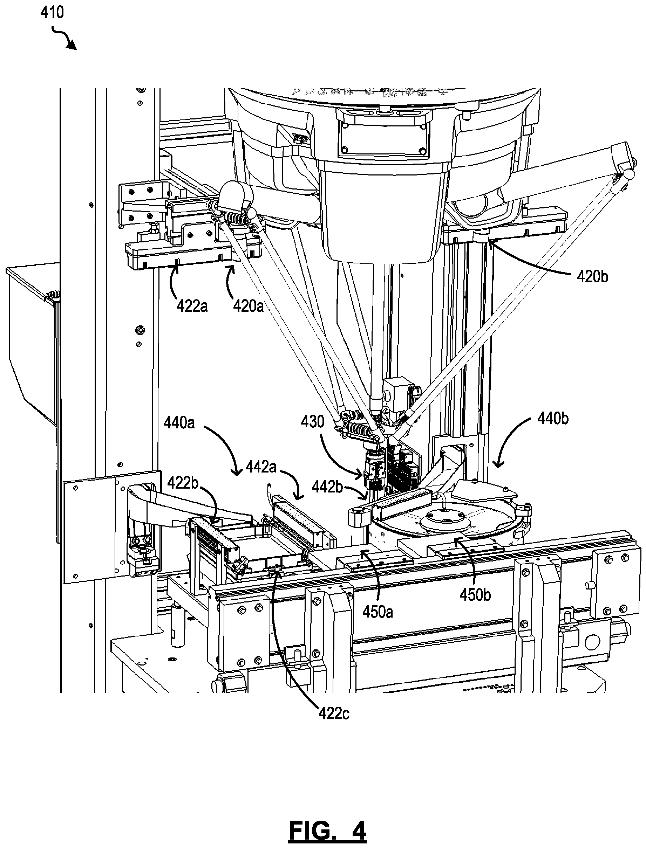

Referring now to FIG. 4, shown therein is a diagram of an example workpiece processing station 410. Similar to the workpiece processing station 310, the workpiece processing station 410 shown in FIG. 4 can act as a feeder for retrieving workpieces from a picking area and transferring the workpieces to receiving areas 450a, 450b. The workpiece processing station 410 can include an autonomous pick-and-place robot 430, imaging devices 420a, 420b, and picking areas 440a, 440b mounted thereon. Similar to the workpiece processing station 110 of FIG. 2, the workpiece processing station 410 includes a station control system (not shown in FIG. 4). In some embodiments, the workpiece processing station 410 can also include one or more pre-processing areas (not shown in FIG. 4).

Imaging devices 420 can capture images of one or more workpieces within the pre-processing area and/or picking areas 440. The workpiece processing station 410 can also include lighting components 422a, 422b, 422c. Lighting components 422 can providing lighting to the pre-processing area and the picking areas 440 to improve the image captured by the imaging devices 420. In some embodiments, the workpiece processing station 410 may not include lighting components. For example, depending on the imaging device 420, additional lighting may not improve the data captured by the imaging devices 420.

As shown in FIG. 4, the picking areas 440 can be different types. In particular, the picking area 440b includes a dial-based feeder, similar to picking areas 340. However, the picking area 440a includes a vibratory tray.

In some embodiments, unpickable workpieces can continuously remain in the picking areas 440 until they are processed. In some embodiments, unpickable workpieces can be removed from the picking areas 440 if they remain unprocessed. As shown in FIG. 4, the workpiece processing station 410 can include workpiece purge mechanisms 442 to remove unpickable workpieces.

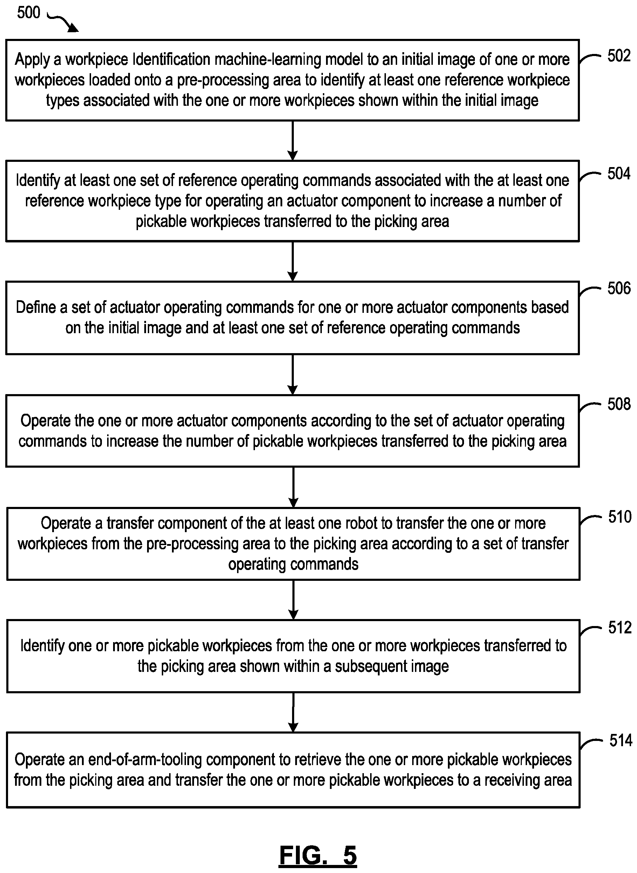

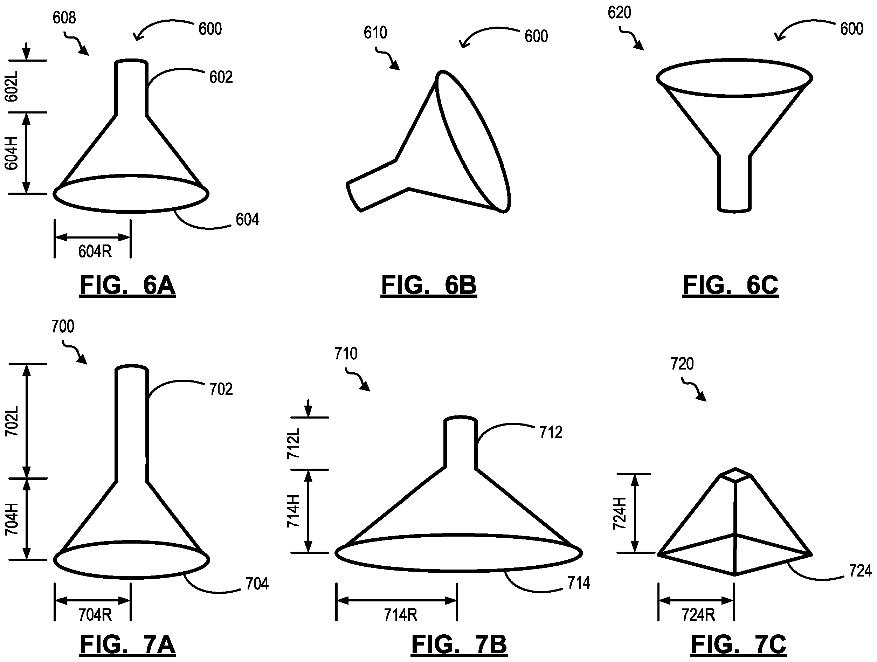

Referring now to FIG. 5, which is a flowchart of an example method 500 for operating at least one autonomous robot to transfer a plurality of workpieces. To assist with the description of method 500, reference will be made simultaneously to FIGS. 6A, 6B, 6C, 7, 8A, 8B, and 8C.

Although the following description will refer to workpiece processing station 110, the workpiece processing station can be any workpiece processing station, such as workpiece processing stations 110, 310, or 410. The workpiece processing station 110 can include a station processor, such as processor 212, an imaging device, such as imaging device 220, 320a, 320b, 420a, or 420b, and an autonomous robot, such as pick-and-place robot 230a, pre-processing robot 230b, or autonomous robots 330 or 430.

At 502, the processor 212 applies a workpiece identification machine-learning model to an initial image to identify at least one reference workpiece type associated with one or more workpieces shown within the initial image. An example workpiece 600 is shown in FIG. 6A. As shown in FIG. 6A, example workpiece 600 includes a stem portion 602 and a cone portion (e.g., circular pyramid) 604. The stem portion 602 has a length 602L and the cone portion 604 has a height 604H and radius 604R.

The machine-learning model can be generated based on a set of training images in which one or more reference workpieces shown within a training image of the set of training images types are annotated with a reference workpiece type. The processor 212 can identify at least one reference workpiece type based on the one or more workpieces having at least one property similar to the at least one reference workpiece type. For example, the one or more workpieces can have a similar shape, size, material, surface, or structure as the at least reference workpiece type.

For example, the processor 212 can identify the at least one reference workpiece type based on the reference workpiece type having at least one of a similar size, a similar shape, and a similar material as the one or more workpieces within the picking area. Reference is now made to FIGS. 7A to 7C, which show example reference workpieces 700, 710, and 712, respectively. As shown in FIG. 7A, example reference workpiece 700 also includes a stem portion 702 and a cone portion 704, similar to workpiece 600. Thus, example reference workpiece 700 can have a similar shape as workpiece 600. Accordingly, the processor 212 can identify example reference workpiece 700 as a reference workpiece type associated with workpiece 600. However, the length 702L of stem portion 702 is longer than length 602L while the cone portion 704 has a similar height 704H and radius 704R as cone portion 604 of workpiece 600. In some embodiments, the processor 212 may not identify example reference workpiece 700 as a reference workpiece type associated with workpiece 600.

As shown in FIG. 7B, example reference workpiece 710 also includes a stem portion 712 and a cone portion 714, similar to workpiece 600 and 700. Thus, example reference workpiece 700 can have a similar shape as workpiece 600. Accordingly, the processor 212 can also identify example reference workpiece 710 as a reference workpiece type associated with workpiece 600. However, the radius 714R of cone portion 714 is larger than the radius 604R of cone portion 604 while the height 714H of cone portion 714 and the length of stem portion 712 are a similar to that of the cone portion 604 and the stem portion 602 of workpiece 600. In some embodiments, the processor 212 may not identify example reference workpiece 710 as a reference workpiece type associated with workpiece 600.

As shown in FIG. 7C, example reference workpiece 720 also includes a cone portion 724, similar to workpiece 600 and 700. However, the reference workpiece 720 does not include a stem portion. Accordingly, the processor 212 may not identify example reference workpiece 720 as a reference workpiece type associated with workpiece 600. However, the cone portion 724 is a square pyramid having a height of 724H and a radius of 724R, similar to the height 704H and the radius 704R of cone portion 604 of workpiece 600. Thus, example reference workpiece 720 can have a similar size as workpiece 600. In some embodiments, the processor 212 may identify example reference workpiece 720 as a reference workpiece type associated with workpiece 600.

The example reference workpieces 700, 710, and 720 are shown for illustrative purposes. Other reference workpieces are possible. For example, a reference workpiece can have a stem portion and cone portion similar in length, height, and radius as that of stem portion 602 and cone portion 604 of workpiece 600. However, the reference workpiece can further include a rim along the cone portion 604. In another example, a reference workpiece can have a stem portion and cone portion similar in length, height, and radius as that of stem portion 602 and cone portion 604 of workpiece 600. However, the reference workpiece can be formed of a different material from workpiece 600. In another example, a reference workpiece can be formed of a similar material as workpiece 600. However, the reference workpiece may not include a stem portion and cone portion similar to the stem portion 602 and cone portion 604 of workpiece 600.

In some embodiments, the method 500 involves capturing, by the imaging device 220, the initial image of the one or more workpieces 600 within the pre-processing area. Furthermore, in some embodiments, prior to capturing the initial image, the one or more actuator components of the autonomous robot 230 can operate according to a set of pre-determined operating commands. For example, in some embodiments, the workpieces 600 can be within the pre-processing area. The workpieces 600 can be poured and land in a pile. The autonomous robot 230 can initially shuffle the workpieces 600 within the pre-processing area to spread the workpieces 600 within the pre-processing area.

In some embodiments, the method 500 involves operating the transfer component of the autonomous robot 230 to transfer the one or more workpieces 600 to the pre-processing area.

In some embodiments, the processor 212 may not apply the workpiece identification machine-learning model to the initial image to identify the at least one reference workpiece type associated with one or more workpieces shown within the initial image. Instead, the processor 212 can receive input indicative of the at least one reference workpiece type. For example, the input can be user input or other identification data such as but not limited to a barcode, an RFID code, or any other appropriate data indicative of the at least one reference workpiece.

Returning now to FIG. 5, the processor 212 identifies at least one set of reference operating commands associated with the at least one reference workpiece type 700, 710, 720 at 504. The at least one set of reference operating commands includes one or more commands for operating an actuator component of the autonomous robot 230 to increase a number of pickable workpieces transferred to the picking areas 340, 440.

In some embodiments, the at least one set of reference operating commands can include two or more sets of reference operating commands. For example, the two or more sets of reference operating commands can be associated with a particular reference workpiece type 700, 710, 720 and different actuator components of the autonomous robot 230. In another example, the two or more sets of reference operating commands can be associated with different reference workpiece types 700, 710, 720 identified at 502 and a particular actuator component of the autonomous robot 230.

At 506, the processor 212 defines a set of actuator operating commands for one or more actuator components of the autonomous robot 230 based on the initial image and the at least one set of reference operating commands.

In some embodiments, the processor 212 can identify each workpiece of the one or more workpieces 600 at the pre-processing area shown in the initial image as pickable or unpickable based on at least one of a position or an orientation of the workpiece 600. In some embodiments, the processor 212 applies a machine learning model to the initial image to identify one or more pickable workpieces from the one or more workpieces 600.

The pickability of a workpiece 600 can be based on an orientation 608 of the workpiece 600. Reference is now made to FIG. 6B and 6C, which show the example workpiece 600 having different orientations 610 and 620, respectively. In some embodiments, one or more of orientations 608, 610, 620 can be pickable.

FIG. 6A shows example workpiece 600 in the first orientation 608 with the cone portion 604 downwards and the stem portion 602 upwards. The first orientation 608 can be considered a stable orientation as the workpiece 600 generally does not move, at least in the absence of external forces.

As shown in FIG. 6B, a second orientation 610 involves example workpiece 600 on its side, that is, the cone portion 604 sideways. In some embodiments, the second orientation 610 can be considered an unstable orientation as the workpiece 600 may move. In particular, the workpiece 600 can roll along the cone portion 604 when subjected to external forces. In some embodiments, the second orientation 610 can be considered a stable orientation despite being rollable along the cone portion 604.

As shown in FIG. 6C, a third orientation 620 involves example workpiece 600 with the stem portion 602 downwards and the cone portion 604 upwards. In some embodiments, the third orientation 620 can be considered an unstable orientation as the workpiece 600 may move. In particular, the workpiece 600 can tip to the side, resulting in the second orientation 610 when subjected to external forces.

The orientations shown in FIGS. 6A to 6C are illustrative only. Other workpieces having different geometries can have other orientations. In particular, workpieces can be three-dimensional objects having six degrees of freedom. For example, a workpiece can be similar to a coin having a face side and a tail side. The workpiece can be pickable or unpickable based on whether the tail side is up or down. Likewise, a workpieces can be similar to a die having six faces and the workpiece can be pickable or unpickable based on whether a particular face is up, down, or on the side.

Other orientations are possible, such as but not limited to right side up, upside down, pure side, too tangled, on tab (for workpieces that have a tab), or on tail (for workpieces that have a tail). In some embodiments, the processor 212 can identify the orientation of each workpiece of the one or more workpieces 600 at the pre-processing area shown in the initial image as one of the known orientations for that workpiece 600.

The pickability of a workpiece 600 can be based on a position of the workpiece 600. For example, an end-of-tooling component may require clear space around a workpiece 600 to engage the workpiece 600. The position of a workpiece 600 within the pre-processing area can result in the workpiece being transferred to a portion of the picking area that renders the workpiece unpickable. For example, the resultant position of the workpiece relative to the picking area can be positioned too close to a sidewall of the picking area. It should be noted that the size and location of the clear space required can vary. For example, larger grippers may require more clear space than smaller grippers. As well, different grippers may not require clear space around the entire perimeter of the workpiece 600.

The position of a workpiece relative to other workpieces 600 on the pre-processing area can also render the workpiece 600 unpickable. For example, workpieces 600 that are clustered together on the pre-processing area can be transferred to the picking area in a cluster and be unpickable. Workpieces 600 that are clustered together may not have sufficient clear space around the workpiece 600 for the end-of-tooling component to engage the workpiece.

In some embodiments, an actuator component can generate an adjusting motion to vibrate the pre-processing area. When the pre-processing area is vibrated, the position and orientation of workpiece 600 can change. Workpieces 600 can be reoriented , such as orientation 608 to orientation 610, or vice versa. In addition, workpieces 600 can change position within the picking area and relative to other workpieces.

In some embodiments, the processor 212 can determine a number of stable orientations for the one or more workpieces 600 within the pre-processing area, and adapt the at least one set of reference commands associated with the at least one reference workpiece type 700, 710, 720 based on the number of stable orientations for the one or more workpieces 600 within the pre-processing area to define the set of actuator operating commands for the one or more actuator components of the autonomous robot 230.

In some embodiments, the at least one set of reference operating commands can include at least one of an amplitude or a frequency of the adjusting motion. The processor 212 can adapt one or more of the amplitude or the frequency of the adjusting motion of the one or more actuator components of the at least one set of reference operating commands to define the set of actuator operating commands for the one or more actuator components of the autonomous robot 230. For example, at greater amplitudes and lower frequencies, workpieces having a stable orientation, such as orientation 608, may be reoriented to have an unstable orientation, such as orientation 610. In this example, the processor 212 can define operating commands that ensure that the amplitude of the adjusting motion is smaller to avoid reorienting workpieces having a stable orientation 608 to an unstable orientation 610.

In some embodiments, the at least one set of reference operating commands can include a plurality of sets of reference operating commands. The processor 212 can select one set of reference operating commands of the two or more sets of reference operating commands as an initial set of reference operating commands and adapt the initial set of reference operating commands based on each unselected set of reference operating commands of the two or more sets of reference operating commands to define the set of actuator operating commands for the one or more actuator components of the autonomous robot 230. In some embodiments, the initial set of reference operating commands can be associated with a reference workpiece type 700, 710, 720 most similar to the one or more workpieces within the pre-processing area. For example, a first reference workpiece type 700, 710 can be identified as being most similar due to its shape and material being similar to the one or more workpieces within the pre-processing area but a different size while a second reference workpiece type can be identified as being less similar due to its size and shape being similar to the one or more workpieces within the pre-processing area but a different material. Although the properties of shape, material, and size are provided in this example, the processor can select a reference workpiece type as being most similar based on any property or combination of properties.

In some embodiments, adapting the reference operating commands to define the set of actuator operating commands can involve machine-learning or other algorithms. In some embodiments, the reference operating commands associated with a reference workpiece type can be initially determined experimentally. For example, a plurality of different actuator operating commands can be applied to difference workpieces and reference operating commands can be defined based on the experimental results.

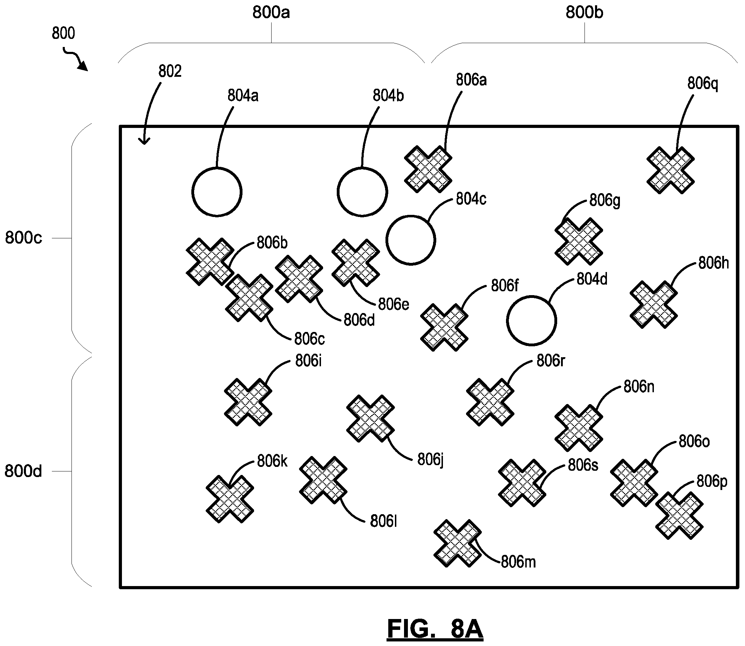

In some embodiments, the processor 212 can generate a workpiece map for the one or more workpieces 600. The workpiece map can include a representation of each of the one or more workpieces 600 loaded on the pre-processing area as an unpickable workpiece or a pickable workpiece. An example workpiece map 800 is shown in FIG. 8A. As can be seen in FIG. 8A, one or more workpieces 804a, 804b, 804c, 804d, 806a, 806b, 806c, 806d, 806e, 806f, 806g, 806h, 806i, 806j, 806k, 806l, 806m, 806n, 806o, 806p, 806q, 806r, 806s (collectively referred to as one or more workpieces 804, 806) are within the pre-processing area 802. The processor 212 can identify workpieces 804a, 804b, 804c, and 804d as being pickable workpieces, represented by circles in FIG. 8A. The processor 212 can identify workpieces 806a, 806b, 806c, ... 806s as being unpickable workpieces, represented by crosses in FIG. 8A.

In some embodiments, the processor 212 can determine a workpiece density for the one or more workpieces 804, 806 within the pre-processing area 802, and adapt the at least one set of reference operating commands associated with the at least one reference workpiece type 700, 710, 720 based on the workpiece density of the one or more workpieces 804, 806 within the pre-processing area 802 to define the set of actuator operating commands for the one or more actuator components of the 230. The workpiece density can be representative of a ratio of a plan view area of the one or more workpieces 804, 806 within the pre-processing area 802 to a plan view area of the pre-processing area 802.

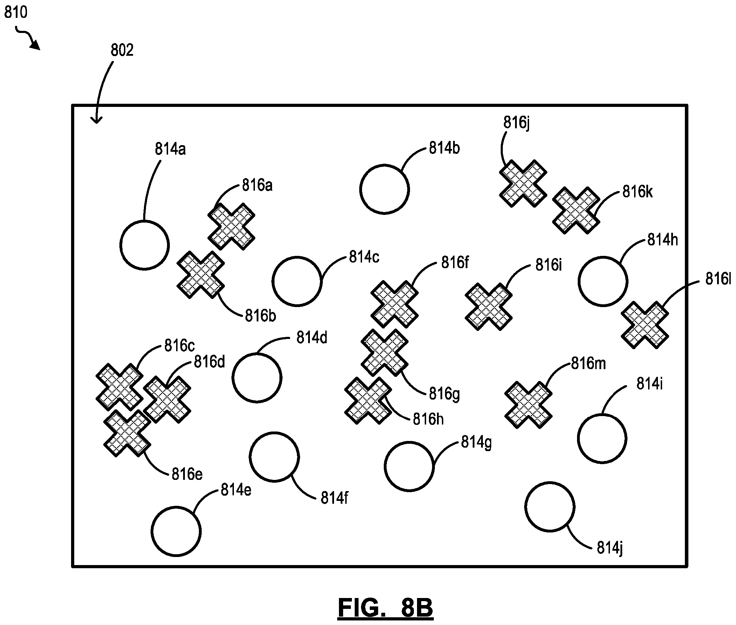

Based on the workpiece density of the workpiece map 810, the processor 212 can define the set of actuator operating commands for the one or more actuator components of the autonomous robot 230. For example, the processor 212 can select an actuator component to vibrate the pre-processing area 802. An example workpiece map 810 after the pre-processing area 802 is vibrated is shown in FIG. 8B. As can be seen in FIG. 8B, more workpieces are identified as being pickable workpieces 814a, 814b, 814c, 814d, 814e, 814f, 814g, 814h, 814i, 814j and fewer workpieces are identified as being unpickable workpieces 816a, 816b, 816c, 816d, 816e, 816f, 816g, 816h, 816i, 816j, 816k, 816l, 816m than that compared to workpiece map 800 of FIG. 8A.

Furthermore, in some embodiments, the processor 212 can determine a workpiece density of a portion of the pre-processing area 802 and define the set of actuator operating commands for the one or more actuator components of the autonomous robot 230 based on the workpiece density of a portion of the pre-processing area 802. Returning now to FIG. 8A, the processor 212 can determine that the workpiece density of the portion of the pre-processing area 802 in the left portion 800a of the workpiece map is greater than the workpiece density of the portion of the pre-processing area 802 in the right portion 800b of the workpiece map. Similarly, the processor 212 can determine that the workpiece density of the portion of the pre-processing area 802 in the upper portion 800c of the workpiece map is greater than the workpiece density of the portion of the pre-processing area 802 in the lower portion 800d of the map. In some embodiments, the processor 212 can define the set of actuator operating commands for the one or more actuator components of the autonomous robot 230 to yield a pre-determined workpiece density for the portion of the pre-processing area 802.

In some embodiments, the processor 212 can determine a pickable workpiece density for the one or more workpieces 804, 806, and select the one or more actuator components from a plurality of actuator components of the autonomous robot 230 based on the pickable workpiece density. In some embodiments, the pickable workpiece density can be representative of a ratio of a plan view area of one or more pickable workpieces 804 to a plan view area of the pre-processing area 802. In some embodiments, the pickable workpiece density can be representative of a ratio of a plan view area of one or more pickable workpieces 804 to a plan view area of the one or more workpieces 804, 806 on the pre-processing area 802, that is the total plan view area of the pickable and unpickable workpieces 804, 806.

For example, based on the workpiece map 800, the processor 212 can determine whether a difference between a density of pickable workpieces 804 of a portion of the pre-processing area 802 and a density of pickable workpieces 804 of another portion of the pre-processing area 802 exceeds a pre-determined value. For example, the pickable workpiece density of the portion of the pre-processing area 802 in the upper portion 800c of the workpiece map is greater than the pickable workpiece density of the portion of the pre-processing area 802 in lower portion 8ood of the workpiece map.

In some embodiments, if the difference between the density of pickable workpieces 804 of a portion of the pre-processing area 802 and the density of pickable workpieces 804 of another portion of the pre-processing area 802 exceeds the pre-determined value, the processor 212 can identify the portion of the pre-processing area 802 having a lower pickable workpiece density as a region of interest; and define the set of actuator operating commands for the one or more actuator components of the autonomous robot 230 to increase the number of pickable workpieces 804 within the region of interest of the pre-processing area 802. In some embodiments, the processor 212 can define the set of actuator operating commands for the one or more actuator components of the autonomous robot 230 to yield a pre-determined pickable workpiece density.

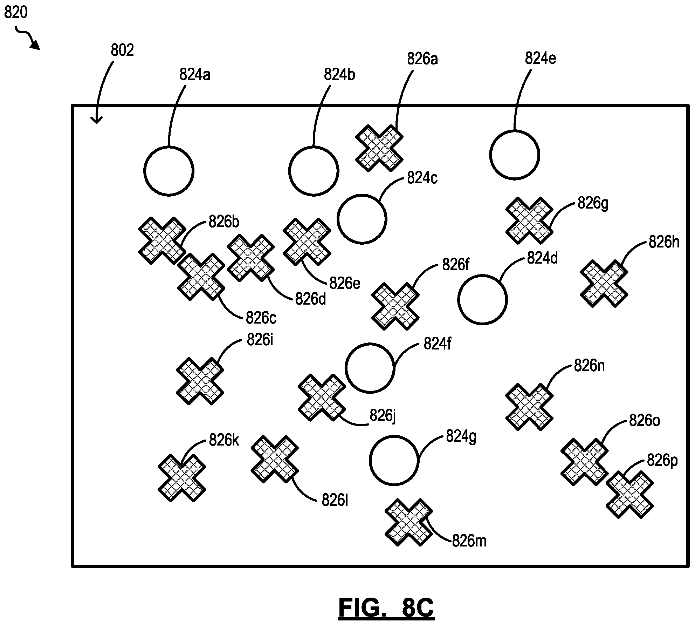

In some embodiments, an actuator component can generate an adjusting motion to shuffle, reposition, and/or reorient workpieces 804, 806 in a portion of the pre-processing area 802. When the actuator component is operated, the position and orientation of workpieces 804, 806 within that region can change. For example, the processor 212 can select a paddle to pass over the portion of the pre-processing area 802 in the right portion 800b of the workpiece map. An example workpiece map 820 after the paddle passes over the portion of the pre-processing area 802 is shown in FIG. 8C. As can be seen in FIG. 8C, more workpieces are identified as being pickable workpieces 824a, 824b, 824c, 824d, 824e, 824f, 824g and less workpieces are identified as being unpickable workpieces 826a, 826b, 826c, 826d, 826e, 826f, 826g, 826b, 826i, 826j, 826k, 826l, 826m, 826n, 826o, 826p than that compared to workpiece map 800 of FIG. 8A.

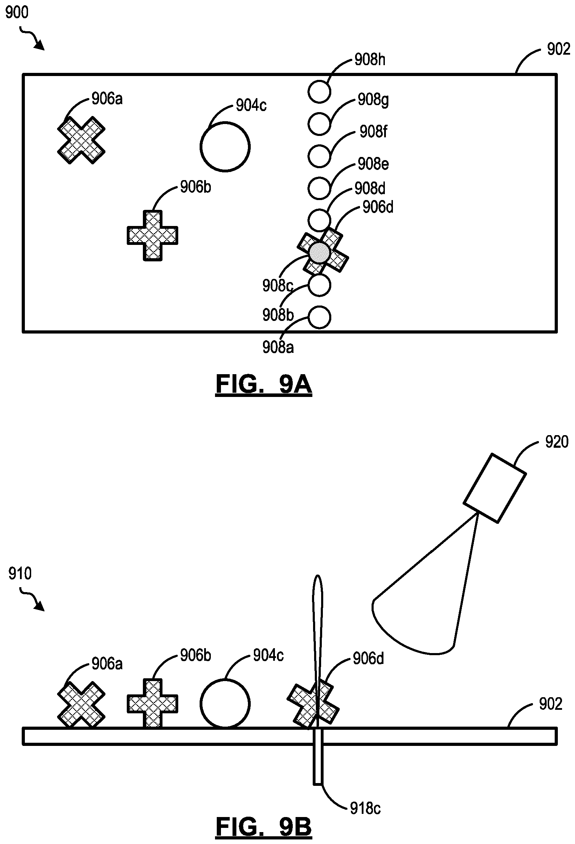

Referring now to FIGS. 9A and 9B, shown therein is a top plan view 900 and a side view 910 of one or more example workpieces within an assembly line, such as can be an automated assembly line 100. The one or more workpieces can be loaded on a pre-processing area 902. The imaging device 920 can capture images of the pre-processing area 902 with the one or more workpieces loaded thereon. Based on the images captured, a processor 212 can identify workpieces as being pickable 904c or unpickable 906a, 906b, and 906d. Furthermore, the processor 212 can determine that the number of pickable workpieces only need to be increased in a portion of the pre-processing area 902 and not the entire picking area. For example, the processor 212 can determine that the density of pickable workpieces in a bottom portion of the pre-processing area 902 as shown in FIG. 9A should be increased.

Generally, the most optimal solution typically involves the highest percentage of pickable parts spread evenly over the pick field. For example, only picking good parts from the edges of the conveyor would cause wastage within the center region. When the processor 212 determines such instances, the processor 212 could proceed to adjust operation of components of the pick-and-place robot 230a and/or the pre-processing robot 230b, such as but not limited to paddle wheel speed, conveyor speed or index distance, and/or the parameters of other part conditioning modules (such as the motion profile of a part spreader. For example, an oscillating rake style tool which spreads the parts by creating spaces between them.). For feeder configurations with independent hoppers, for example, the disclosed systems and methods can monitor certain aspects, such as but not limited to, the output and/or the part density (e.g. 10% of the picking area covered =50 ppm, 5% of the picking area covered= 55ppm, 2% of the picking area covered=42 ppm) and determine the optimal part density, and then change the hopper parameters to deliver that density accordingly.

As illustrated in FIG. 9A, the surface of the pre-processing area 902 can include one or more holes 908a, 908b, 908c, 908d, 908e, 908f, 908g, 908h (herein collectively referred to as holes 908), through which air can be blow upwards. As illustrated in FIG. 9B, the processor 212 can select an actuator component 918c to blow air upwards, through the one or more holes 908, to reorient workpieces, such as workpiece 906d. The operating command of the actuator component 918c can be defined such that the workpiece 906d is adjusted to have a pickable orientation and position. For example, with an air blower, the duration and strength of the air blower 918c can be adjusted.

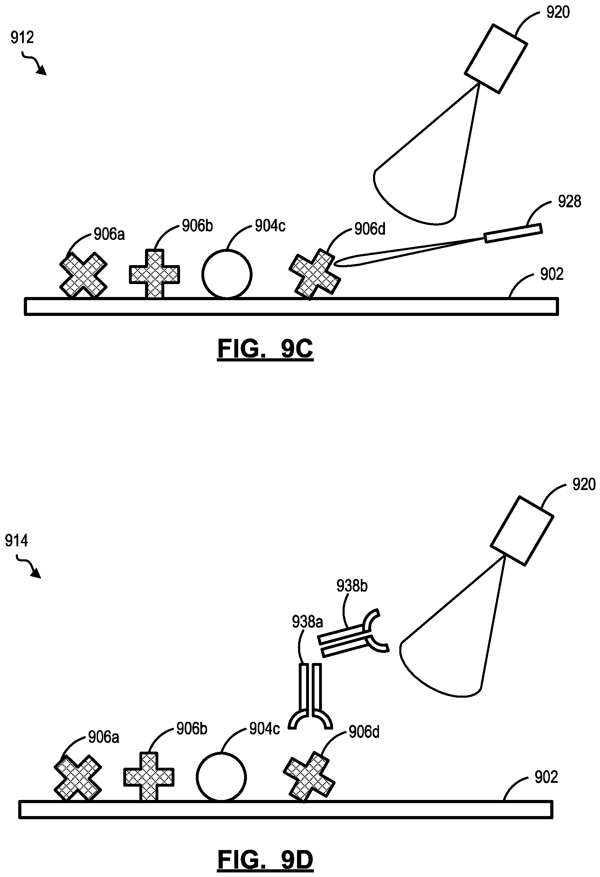

Referring now to FIG. 9C, shown therein is a side view 912 of another example actuator component 928 that can be selected by the processor 212 to reorient workpieces on the pre-processing area 902. In particular, the processor 212 can select a blower 928 to blow air at the workpieces, from above the pre-processing area 902. The operating command of the actuator component 928 can be defined such that the workpiece 906d is adjusted to have a pickable orientation and position. For example, with an air blower 928, the duration and strength of the air blower 928 can be adjusted. In some embodiments, the duration and strength of the air blower 928 can be based on the orientation of the workpiece 906d. That is, the duration and strength of the air blower 928 can depend on the orientation of the workpiece 906. For example, in some cases, it can be desirable to blow air at a higher rate and for a longer duration on a workpiece 906 in a particular orientation, such as a workpiece that is upside down, and air at a slower rate and for a shorter duration on a workpiece 906 in another orientation, such as a workpiece that is on its side.

Referring now to FIG. 9D, shown therein is a side view 914 of yet another example actuator component 928 that can be selected by the processor 212 to reorient workpieces on the pre-processing area 902. In particular, the processor 212 can select a vacuum 938a to pick up the workpieces 906d by suction from above the pre-processing area 902 and to drop the workpiece 906d back on to the pre-processing area 902. The operating command of the actuator component 938a can be defined such that the workpiece 906d is adjusted to have a pickable orientation and position. For example, with a vacuum 938a, angle and position of the vacuum 938b when the workpiece 906d is released can be adjusted.

Returning now to FIG. 5, at 508, the one or more actuator components operate according to the set of actuator operating commands to increase the number of pickable workpieces 804 transferred to the picking area 802. That is, the one or more actuator components can adjust the position and/or the orientation of the one or more workpieces 600 in the pre-processing area.

At 510, a transfer component operates to transfer the one or more workpieces 600 from the pre-processing area to the picking area 802. In some embodiments, 508 and 510 can occur simultaneously. For example, the actuator components can adjust the position and/or orientation of the one or more workpieces 600 as the transfer component is in the process of transferring the one or more workpieces 600 from the pre-processing area to the picking area 802.

In some embodiments, the processor 212 can operate to identify at least one set of reference transfer operating commands associated with the at least one reference workpiece type 700, 710, 720; and define the set of transfer operating commands for the transfer component of the autonomous robot 230 based on the at least one set of reference transfer operating commands associated with the at least one reference workpiece type 700, 710, 720. The at least one set of reference operating commands can include one or more commands for operating the transfer component to yield a pre-determined workpiece density of workpieces on the picking area 802.

In some embodiments, the at least one set of reference transfer operating commands can include an operating speed and an operating duration of the transfer component. For example, the transfer component can include a conveyor. The processor 212 can adapt one or more of the operating speed and the operating duration of the transfer component of the at least one set of reference transfer operating commands to define the set of transfer operating commands for the transfer component of the autonomous robot 230.

At 512, the processor 212 identifies one or more pickable workpieces 824 from the one or more workpieces 600 transferred to the picking area shown within a subsequent image. The subsequent image illustrates the one or more workpieces 824, 826 subsequent to the one or more actuator components being operated according to the set of actuator operating commands at 508.

In some embodiments, the processor 212 applies a pickable workpiece identification machine learning model to the subsequent image of the one or more workpieces to identify the one or more pickable workpieces 824 from the one or more workpieces 600 transferred to the picking area.

In some embodiments, the one or more actuator components operate until the number of pickable workpieces 824 is at least a pre-determined minimum number of pickable workpieces prior to operating the transfer component of the autonomous robot 230 to transfer the one or more workpieces from the pre-processing area to the picking area 802. The processor 212 can apply machine learning model(s) to adapt the operating commands of the actuator components.

In some embodiments, the processor 212 can determine whether the number of pickable workpieces 804 shown within an additional image is at least a pre-determined minimum number of pickable workpieces. The additional image can illustrate the one or more workpieces loaded on the pre-processing area subsequent to the one or more actuator components having operated according to the set of actuator operating commands. In response to determining that the number of pickable workpieces 824 is less than a pre-determined minimum number of pickable workpieces, the processor 212 can define an additional set of actuator operating commands for the one or more actuator components of the autonomous robot 230 based on the subsequent image and the at least one set of reference operating commands associated with the at least one reference workpiece type 700, 710, 720. The one or more actuator components can then operate according to the respective additional set of actuator operating commands to increase the number of pickable workpieces 824 transferred to the picking area 802.

At 514, the end-of-arm-tooling component of the autonomous robot 230 can operate to retrieve the one or more pickable workpieces from the picking area 802 and to transfer the one or more pickable workpieces 824 to a receiving area.

In some embodiments, the autonomous robot 230 can operate to remove unpicked workpieces 826 from the picking area 802. For example, a pick-and-place robot 230a can include a workpiece purge mechanism 442 to remove unpickable workpieces 826.

In some embodiments, additional workpieces can be loaded to the pre-processing area and the method 500 can be iterated.

It will be appreciated that numerous specific details are set forth in order to provide a thorough understanding of the example embodiments described herein. However, it will be understood by those of ordinary skill in the art that the embodiments described herein may be practiced without these specific details. In other instances, well-known methods, procedures and components have not been described in detail so as not to obscure the embodiments described herein. Furthermore, this description and the drawings are not to be considered as limiting the scope of the embodiments described herein in any way, but rather as merely describing the implementation of the various embodiments described herein.

The embodiments of the systems and methods described herein may be implemented in hardware or software, or a combination of both. These embodiments may be implemented in computer programs executing on programmable computers, each computer including at least one processor, a data storage system (including volatile memory or non-volatile memory or other data storage elements or a combination thereof), and at least one communication interface. For example and without limitation, the programmable computers (referred to below as computing devices) may be a server, network appliance, embedded device, computer expansion module, a personal computer, laptop, personal data assistant, cellular telephone, smart-phone device, tablet computer, a wireless device or any other computing device capable of being configured to carry out the methods described herein.

In some embodiments, the communication interface may be a network communication interface. In embodiments in which elements are combined, the communication interface may be a software communication interface, such as those for inter-process communication (IPC). In still other embodiments, there may be a combination of communication interfaces implemented as hardware, software, and combination thereof.

Program code may be applied to input data to perform the functions described herein and to generate output information. The output information is applied to one or more output devices, in known fashion.

Each program may be implemented in a high level procedural or object oriented programming and/or scripting language, or both, to communicate with a computer system. However, the programs may be implemented in assembly or machine language, if desired. In any case, the language may be a compiled or interpreted language. Each such computer program may be stored on a storage media or a device (e.g., ROM, magnetic disk, optical disc) readable by a general or special purpose programmable computer, for configuring and operating the computer when the storage media or device is read by the computer to perform the procedures described herein. Embodiments of the system may also be considered to be implemented as a non-transitory computer-readable storage medium, configured with a computer program, where the storage medium so configured causes a computer to operate in a specific and predefined manner to perform the functions described herein.

Furthermore, the system, processes and methods of the described embodiments are capable of being distributed in a computer program product comprising a computer readable medium that bears computer usable instructions for one or more processors. The medium may be provided in various forms, including one or more diskettes, compact disks, tapes, chips, wireline transmissions, satellite transmissions, internet transmission or downloadings, magnetic and electronic storage media, digital and analog signals, and the like. The computer useable instructions may also be in various forms, including compiled and non-compiled code.

Various embodiments have been described herein by way of example only. Various modification and variations may be made to these example embodiments without departing from the spirit and scope of the invention, which is limited only by the appended claims.

Various embodiments have been described. The present invention may also (alternatively) be described by the below numbered aspects 1 to 58.

### ASPECTS:

1. A method of operating at least one autonomous robot to transfer a plurality of workpieces, the at least one autonomous robot being in communication with at least one processor, the method comprising:
   operating the at least one processor to:
      apply a workpiece identification machine-learning model to an initial image to identify at least one reference workpiece type associated with one or more workpieces shown within the initial image, the one or more workpieces being loaded onto a pre-processing area;
      identify at least one set of reference operating commands associated with the at least one reference workpiece type, the at least one set of reference operating commands comprising one or more commands for operating an actuator component of the at least one autonomous robot to increase a number of pickable workpieces transferred to a picking area; and
      define a set of actuator operating commands for one or more actuator components of the at least one autonomous robot based on the initial image and the at least one set of reference operating commands;
   operating the one or more actuator components according to the set of actuator operating commands to increase the number of pickable workpieces transferred to the picking area;
   operating a transfer component of the at least one autonomous robot according to a set of transfer operating commands to transfer the one or more workpieces from the pre-processing area to the picking area;
   operating the at least one processor to identify one or more pickable workpieces from the one or more workpieces transferred to the picking area shown within a subsequent image, the subsequent image illustrating the one or more workpieces subsequent to the one or more actuator components being operated according to the set of actuator operating commands; and
   operating an end-of-arm-tooling component of the at least one autonomous robot to retrieve the one or more pickable workpieces from the picking area and to transfer the one or more pickable workpieces to a receiving area.
2. The method of aspect 1, wherein the at least one set of reference operating commands comprise two or more sets of reference operating commands.
3. The method of aspect 2, wherein each set of reference operating commands of the two or more sets of reference operating commands is associated with a different reference workpiece type.
4. The method of any one of aspects 2 to 3, comprising operating the at least one processor to:
   select one set of reference operating commands of the two or more sets of reference operating commands as an initial set of reference operating commands, the initial set of reference operating commands being associated with a reference workpiece type most similar to the one or more workpieces loaded onto the pre-processing area; and
   adapt the initial set of reference operating commands based on each unselected set of reference operating commands of the two or more sets of reference operating commands to define the set of actuator operating commands for the one or more actuator components of the at least one autonomous robot.
5. The method of any one of aspects 1 to 4, comprising operating the at least one processor to select the at least one reference workpiece type based on the reference workpiece type having at least one of a similar size, a similar shape, and a similar material as the one or more workpieces loaded onto the pre-processing area.
6. The method of any one of aspects 1 to 5, comprising operating the at least one processor to:
   determine a number of stable orientations for the one or more workpieces loaded onto the pre-processing area, each stable orientation comprising an orientation of the one or more workpiece in which the one or more workpieces is stable; and
   adapt the at least one set of reference commands associated with the at least one reference workpiece type based on the number of stable orientations for the one or more workpieces loaded onto the pre-processing area to define the set of actuator operating commands for the one or more actuator components of the at least one autonomous robot.
7. The method of any one of aspects 1 to 6, comprising operating the at least one processor to:
   determine a workpiece density for the one or more workpieces loaded onto the pre-processing area, the workpiece density being representative of a ratio of a plan view area of the one or more workpieces loaded onto the pre-processing area to a plan view area of the pre-processing area; and
   adapt the at least one set of reference operating commands associated with the at least one reference workpiece type based on the workpiece density of the one or more workpieces loaded onto the pre-processing area to define the set of actuator operating commands for the one or more actuator components of the at least one autonomous robot.
8. The method of any one of aspects 1 to 7, wherein:
   the at least one set of reference operating commands comprise at least one of an amplitude or a frequency of an adjusting motion of the one or more actuator components; and
   the method comprises operating the at least one processor to adapt one or more of the amplitude or the frequency of the adjusting motion of the one or more actuator components of the at least one set of reference operating commands to define the set of actuator operating commands for the one or more actuator components of the at least one autonomous robot.
9. The method of any one of aspects 1 to 8 comprising operating the at least one processor to identify each workpiece of the one or more workpieces as pickable or unpickable based on at least one of a position or an orientation of the workpiece.
10. The method of any one of aspects 1 to 9, comprising operating the at least one processor to:
   determine a pickable workpiece density for the one or more workpieces, the pickable workpiece density being representative of a ratio of a plan view area of one or more pickable workpieces to a plan view area of the pre-processing area; and
   select the one or more actuator components from a plurality of actuator components of the at least one autonomous robot based on the pickable workpiece density.
11. The method of any one of aspects 1 or 10, comprising:
   operating the at least one processor to:
      generate a workpiece map for the one or more workpieces, the workpiece map comprising a representation of each of the one or more workpieces loaded on the pre-processing area as an unpickable workpiece or a pickable workpiece; and
      based on the workpiece map, determine whether a difference between a density of pickable workpieces of a portion of the pre-processing area and a density of pickable workpieces of another portion of the pre-processing area exceeds a pre-determined value; and
   in response to determining that the difference between the density of pickable workpieces of a portion of the pre-processing area and the density of pickable workpieces of another portion of the pre-processing area exceeds the pre-determined value, operating the at least one processor to:
      identify the portion of the pre-processing area having a lower pickable workpiece density as a region of interest; and
      define the set of actuator operating commands for the one or more actuator components of the at least one autonomous robot to increase the number of pickable workpieces within the region of interest of the pre-processing area.
12. The method of any one of aspects 1 to 11, comprising, prior to the operating the transfer component of the at least one autonomous robot to transfer the one or more workpieces from the pre-processing area to the picking area:
   operating the at least one processor to determine whether the number of pickable workpieces shown within an additional image is at least a pre-determined minimum number of pickable workpieces, the additional image illustrating the one or more workpieces subsequent to the one or more actuator components being operated according to the set of actuator operating commands; and
   in response to determining that the number of pickable workpieces is less than a pre-determined minimum number of pickable workpieces,
      operating the at least one processor to define an additional set of actuator operating commands for the one or more actuator components of the at least one autonomous robot based on the additional image and the at least one set of reference operating commands associated with the at least one reference workpiece type; and
      operating the one or more actuator components according to the respective additional set of actuator operating commands to increase the number of pickable workpieces transferred to the picking area.
13. The method of any one of aspects 1 to 12, further comprising capturing, by an imaging device, the initial image of the one or more workpieces loaded onto the pre-processing area.
14. The method of aspect 13, comprising, prior to capturing the initial image, operating the one or more actuator components according to a set of pre-determined operating commands.
15. The method of any one of aspects 1 to 14, comprising operating the at least one processor to apply a pickable workpiece identification machine learning model to the subsequent image to identify the one or more pickable workpieces from the one or more workpieces.
16. The method of any one of aspects 1 to 15, comprising operating the transfer component of the at least one autonomous robot to transfer the one or more workpieces to the pre-processing area.
17. The method of any one of aspects 1 to 16, comprising operating the at least one processor to:
   identify at least one set of reference transfer operating commands associated with the at least one reference workpiece type, the at least one set of reference operating commands comprising one or more commands for operating the transfer component to yield a pre-determined workpiece density of workpieces on the picking area; and
   define the set of transfer operating commands for the transfer component of the at least one autonomous robot based on the at least one set of reference transfer operating commands associated with the at least one reference workpiece type.
18. The method of aspect 17, wherein:
   the at least one set of reference transfer operating commands comprise an operating speed and an operating duration of the transfer component; and
   the method comprises operating the at least one processor to adapt one or more of the operating speed and the operating duration of the transfer component of the at least one set of reference transfer operating commands to define the set of transfer operating commands for the transfer component of the at least one autonomous robot.
19. The method of any one of aspects 1 to 18, wherein the at least one autonomous robot comprises a pre-processing robot and at least one pick-and-place robot; the pre-processing robot comprising the transfer component and the one or more actuator components; and the at least one pick-and-place robot comprising the end-of-arm-tooling component.
20. A system to transfer a plurality of workpieces, the system comprising:
   at least one autonomous robot comprising a transfer component, one or more actuator components and an end-of-arm-tooling component, the transfer component operable to transfer the one or more workpieces from a pre-processing area to a picking area according to a set of transfer operating commands, the one or more actuator components operable to increase a number of pickable workpieces transferred from the pre-processing area to the picking area according to a set of actuator operating commands, the end-of-arm-tooling component operable to retrieve one or more pickable workpieces from the picking area and to transfer the pickable workpieces to a receiving area; and
   at least one processor in communication with the at least one autonomous robot, the at least one processor operable to:
      apply a workpiece identification machine-learning model to an initial image to identify at least one reference workpiece type associated with the one or more workpieces shown within the initial image, the one or more workpieces being loaded onto the pre-processing area;
      identify at least one set of reference operating commands associated with the at least one reference workpiece type, the at least one set of reference operating commands comprising one or more commands for operating an actuator component of the at least one autonomous robot to increase the number of pickable workpieces transferred to the picking area;
      define the set of actuator operating commands for the one or more actuator components of the at least one autonomous robot based on the initial image and the at least one set of reference operating commands; and
      identify one or more pickable workpieces from the one or more workpieces transferred to the picking area shown within a subsequent image, the subsequent image illustrating the one or more workpieces subsequent to the one or more actuator components being operated according to the set of actuator operating commands.
21. The system of aspect 20, wherein the at least one set of reference operating commands comprise two or more sets of reference operating commands.
22. The system of aspect 21, wherein each set of reference operating commands of the two or more sets of reference operating commands is associated with a different reference workpiece type.
23. The system of any one of aspects 21 to 22, wherein the at least one processor is operable to:
   select one set of reference operating commands of the two or more sets of reference operating commands as an initial set of reference operating commands, the initial set of reference operating commands being associated with a reference workpiece type most similar to the one or more workpieces loaded onto the pre-processing area; and
   adapt the initial set of reference operating commands based on each unselected set of reference operating commands of the two or more sets of reference operating commands to define the set of actuator operating commands for the one or more actuator components of the at least one autonomous robot.
24. The system of any one of aspects 20 to 23, wherein the at least one processor is operable to select the at least one reference workpiece type based on the reference workpiece type having at least one of a similar size, a similar shape, and a similar material as the one or more workpieces loaded onto the pre-processing area.
25. The system of any one of aspects 20 to 24, wherein the at least one processor is operable to:
   determine a number of stable orientations for the one or more workpieces loaded onto the pre-processing area, each stable orientation comprising an orientation of the one or more workpiece in which the one or more workpieces is stable; and
   adapt the at least one set of reference commands associated with the at least one reference workpiece type based on the number of stable orientations for the one or more workpieces loaded onto the pre-processing area to define the set of actuator operating commands for the one or more actuator components of the at least one autonomous robot.
26. The system of any one of aspects 20 to 25, wherein the at least one processor is operable to:
   determine a workpiece density for the one or more workpieces loaded onto the pre-processing area, the workpiece density being representative of a ratio of a plan view area of the one or more workpieces loaded onto the pre-processing area to a plan view area of the pre-processing area; and
   adapt the at least one set of reference operating commands associated with the at least one reference workpiece type based on the workpiece density of the one or more workpieces loaded onto the pre-processing area to define the set of actuator operating commands for the one or more actuator components of the at least one autonomous robot.
27. The system of any one of aspects 20 to 26, wherein:
   the at least one set of reference operating commands comprise at least one of an amplitude or a frequency of an adjusting motion of the one or more actuator components; and
   the at least one processor is operable to adapt one or more of the amplitude or the frequency of the adjusting motion of the one or more actuator components of the at least one set of reference operating commands to define the set of actuator operating commands for the one or more actuator components of the at least one autonomous robot.
28. The system of any one of aspects 20 to 27, wherein the at least one processor is operable to identify each workpiece of the one or more workpieces as pickable or unpickable based on at least one of a position or an orientation of the workpiece.
29. The system of any one of aspects 20 to 28, wherein the at least one processor is operable to:
   determine a pickable workpiece density for the one or more workpieces, the pickable workpiece density being representative of a ratio of a plan view area of one or more pickable workpieces to a plan view area of the pre-processing area; and
   select the one or more actuator components from a plurality of actuator components of the at least one autonomous robot based on the pickable workpiece density.
30. The system of any one of aspects 20 or 29, wherein the at least one processor is operable to:
   generate a workpiece map for the one or more workpieces, the workpiece map comprising a representation of each of the one or more workpieces loaded on the pre-processing area as an unpickable workpiece or a pickable workpiece;
   based on the workpiece map, determine whether a difference between a density of pickable workpieces of a portion of the pre-processing area and a density of pickable workpieces of another portion of the pre-processing area exceeds a pre-determined value; and
   in response to determining that the difference between the density of pickable workpieces of a portion of the pre-processing area and the density of pickable workpieces of another portion of the pre-processing area exceeds the pre-determined value:
      identify the portion of the pre-processing area having a lower pickable workpiece density as a region of interest; and
      define the set of actuator operating commands for the one or more actuator components of the at least one autonomous robot to increase the number of pickable workpieces within the region of interest of the pre-processing area.
31. The system of any one of aspects 20 to 30, wherein:
   the at least one processor is operable to, prior to the operating the transfer component of the at least one autonomous robot to transfer the one or more workpieces from the pre-processing area to the picking area:
      determine whether the number of pickable workpieces shown within an additional image is at least a pre-determined minimum number of pickable workpieces, the additional image illustrating the one or more workpieces subsequent to the one or more actuator components being operated according to the set of actuator operating commands; and
      in response to determining that the number of pickable workpieces is less than a pre-determined minimum number of pickable workpieces, define an additional set of actuator operating commands for the one or more actuator components of the at least one autonomous robot based on the additional image and the at least one set of reference operating commands associated with the at least one reference workpiece type; and
   the one or more actuator components are further operable according to the respective additional set of actuator operating commands to increase the number of pickable workpieces transferred to the picking area.
32. The system of any one of aspects 20 to 31, further comprising an imaging device operable to capture the initial image of the one or more workpieces loaded onto the pre-processing area.
33. The system of aspect 32, wherein the one or more actuator components are operable according to a set of pre-determined operating commands prior to the imaging device capturing the initial image.
34. The system of any one of aspects 20 to 33, wherein the at least one processor is operable to apply a pickable workpiece identification machine learning model to the subsequent image to identify one or more pickable workpieces from the one or more workpieces.
35. The system of any one of aspects 20 to 34, wherein the transfer component of the at least one autonomous robot is operable to transfer the one or more workpieces to the pre-processing area.
36. The system of any one of aspects 20 to 35, wherein the at least one processor is operable to:
   identify at least one set of reference transfer operating commands associated with the at least one reference workpiece type, the at least one set of reference operating commands comprising one or more commands for operating the transfer component to yield a pre-determined workpiece density of workpieces on the picking area; and
   define the set of transfer operating commands for the transfer component of the at least one autonomous robot based on the at least one set of reference transfer operating commands associated with the at least one reference workpiece type.
37. The system of aspect 36, wherein:
   the at least one set of reference transfer operating commands comprise an operating speed and an operating duration of the transfer component; and
   the at least one processor is operable to adapt one or more of the operating speed and the operating duration of the transfer component of the at least one set of reference transfer operating commands to define the set of transfer operating commands for the transfer component of the at least one autonomous robot.
38. The system of any one of aspects 20 to 37, wherein the at least one autonomous robot comprises a pre-processing robot and at least one pick-and-place robot; the pre-processing robot comprising the transfer component and the one or more actuator components; and the at least one pick-and-place robot comprising the end-of-arm-tooling component.
39. A method of operating at least one autonomous robot to transfer a plurality of workpieces, the method comprising:
   operating at least one processor in communication with the at least one autonomous robot to:
   identify at least one reference workpiece type for one or more workpieces loaded onto a pre-processing area;
   identify at least one set of reference operating commands associated with the at least one reference workpiece type, the at least one set of reference operating commands comprising one or more commands for increasing a number of pickable workpieces transferred to a picking area; and
   define a set of actuator operating commands for one or more actuator components of the at least one autonomous robot based on an initial image showing the one or more workpieces loaded onto the pre-processing area and the at least one set of reference operating commands; and
   operating the at least one autonomous robot according to the set of actuator operating commands to increase the number of pickable workpieces transferred to the picking area.
40. The method of aspect 39 further comprises operating the at least one processor to:
   identify one or more pickable workpieces from the one or more workpieces transferred to the picking area shown within a subsequent image, the subsequent image illustrating the one or more workpieces subsequent to the at least one autonomous robot being operated according to the set of actuator operating commands; and
   retrieve the one or more pickable workpieces from the picking area and to transfer the one or more pickable workpieces to a receiving area.
41. The method of any one of aspects 39 to 40, comprising operating the at least one processor to:
   select one set of reference operating commands of the two or more sets of reference operating commands as an initial set of reference operating commands, the initial set of reference operating commands being associated with a reference workpiece type most similar to the one or more workpieces loaded onto the pre-processing area; and
   adapt the initial set of reference operating commands based on each unselected set of reference operating commands of the two or more sets of reference operating commands to define the set of actuator operating commands for the one or more actuator components of the at least one autonomous robot.
42. The method of any one of aspects 39 to 41, comprising operating the at least one processor to:
   determine an orientation associated with each workpiece of the one or more workpieces loaded onto the pre-processing area; and
   adapt the at least one set of reference operating commands associated with the at least one reference workpiece type based on the orientation associated with at least one workpiece of the one or more workpieces loaded onto the pre-processing area to define the set of actuator operating commands for the one or more actuator components of the at least one autonomous robot.
43. The method of any one of aspects 39 to 42, wherein:
   the at least one set of reference operating commands comprise at least one of an amplitude or a frequency of an adjusting motion of the one or more actuator components; and
   the method comprises operating the at least one processor to adapt one or more of the amplitude or the frequency of the adjusting motion of the one or more actuator components of the at least one set of reference operating commands to define the set of actuator operating commands for the one or more actuator components of the at least one autonomous robot.
44. The method of any one of aspects 39 to 43, comprising operating the at least one processor to identify each workpiece of the one or more workpieces as pickable or unpickable based on at least one of a position or an orientation of the workpiece.
45. The method of any one of aspects 39 to 44, comprising operating the at least one processor to:
   determine a pickable workpiece density for the one or more workpieces, the pickable workpiece density being representative of a ratio of a plan view area of one or more pickable workpieces to a plan view area of the pre-processing area; and
   select the one or more actuator components from a plurality of actuator components of the at least one autonomous robot based on the pickable workpiece density.
46. The method of any one of aspects 39 to 45, comprising operating the transfer component of the at least one autonomous robot to transfer the one or more workpieces to the pre-processing area.
47. The method of any one of aspects 39 to 46, comprising operating the at least one processor to:
   identify at least one set of reference transfer operating commands associated with the at least one reference workpiece type, the at least one set of reference operating commands comprising one or more commands for operating the transfer component to yield a pre-determined workpiece density of workpieces on the picking area; and
   define the set of transfer operating commands for the transfer component of the at least one autonomous robot based on the at least one set of reference transfer operating commands associated with the at least one reference workpiece type.
48. The method of any one of aspects 39 to 47, wherein the at least one autonomous robot comprises a pre-processing robot and at least one pick-and-place robot; the pre-processing robot comprising the transfer component and the one or more actuator components; and the at least one pick-and-place robot comprising the end-of-arm-tooling component.
49. A system to transfer a plurality of workpieces, the system comprising:
   at least one autonomous robot comprising a transfer component, and one or more actuator components, the transfer component operable to transfer the one or more workpieces from a pre-processing area to a picking area according to a set of transfer operating commands, the one or more actuator components operable to increase a number of pickable workpieces transferred from the pre-processing area to the picking area according to a set of actuator operating commands; and
   at least one processor in communication with the at least one autonomous robot, the at least one processor operable to:
      identify at least one reference workpiece type associated with the one or more workpieces loaded onto the pre-processing area;
      identify at least one set of reference operating commands associated with the at least one reference workpiece type, the at least one set of reference operating commands comprising one or more commands for operating an actuator component of the at least one autonomous robot to increase the number of pickable workpieces transferred to the picking area; and
      define the set of actuator operating commands for the one or more actuator components of the at least one autonomous robot based on an initial image showing the one or more workpieces loaded onto the pre-processing area and the at least one set of reference operating commands.
50. The system of aspect 49, further comprising an end-of-arm-tooling component operable to retrieve one or more pickable workpieces from the picking area and to transfer the pickable workpieces to a receiving area; and
   wherein the at least one processor is operable to identify one or more pickable workpieces from the one or more workpieces transferred to the picking area shown within a subsequent image, the subsequent image illustrating the one or more workpieces subsequent to the one or more actuator components being operated according to the set of actuator operating commands.
51. The system of any one of aspects 49 to 50, wherein the at least one processor is operable to:
   select one set of reference operating commands of the two or more sets of reference operating commands as an initial set of reference operating commands, the initial set of reference operating commands being associated with a reference workpiece type most similar to the one or more workpieces loaded onto the pre-processing area; and
   adapt the initial set of reference operating commands based on each unselected set of reference operating commands of the two or more sets of reference operating commands to define the set of actuator operating commands for the one or more actuator components of the at least one autonomous robot.
52. The system of any one of aspects 49 to 51, wherein the at least one processor is operable to:
   determine an orientation associated with each workpiece of the one or more workpieces loaded onto the pre-processing area; and
   adapt the at least one set of reference operating commands associated with the at least one reference workpiece type based on the orientation associated with at least one workpiece of the one or more workpieces loaded onto the pre-processing area to define the set of actuator operating commands for the one or more actuator components of the at least one autonomous robot.
53. The system of any one of aspects 49 to 52, wherein:
   the at least one set of reference operating commands comprise at least one of an amplitude or a frequency of an adjusting motion of the one or more actuator components; and
   the at least one processor is operable to adapt one or more of the amplitude or the frequency of the adjusting motion of the one or more actuator components of the at least one set of reference operating commands to define the set of actuator operating commands for the one or more actuator components of the at least one autonomous robot.
54. The system of any one of aspects 49 to 53, wherein the at least one processor is operable to identify each workpiece of the one or more workpieces as pickable or unpickable based on at least one of a position or an orientation of the workpiece.
55. The system of any one of aspects 49 to 54, wherein the at least one processor is operable to:
   determine a pickable workpiece density for the one or more workpieces, the pickable workpiece density being representative of a ratio of a plan view area of one or more pickable workpieces to a plan view area of the pre-processing area; and
   select the one or more actuator components from a plurality of actuator components of the at least one autonomous robot based on the pickable workpiece density.
56. The system of any one of aspects 49 to 55, wherein the transfer component of the at least one autonomous robot is operable to transfer the one or more workpieces to the pre-processing area.
57. The system of any one of aspects 49 to 56, wherein the at least one processor is operable to:
   identify at least one set of reference transfer operating commands associated with the at least one reference workpiece type, the at least one set of reference operating commands comprising one or more commands for operating the transfer component to yield a pre-determined workpiece density of workpieces on the picking area; and
   define the set of transfer operating commands for the transfer component of the at least one autonomous robot based on the at least one set of reference transfer operating commands associated with the at least one reference workpiece type.
58. The method of any one of aspects 49 to 57, wherein the at least one autonomous robot comprises a pre-processing robot and at least one pick-and-place robot; the pre-processing robot comprising the transfer component and the one or more actuator components; and the at least one pick-and-place robot comprising the end-of-arm-tooling component.

## Claims

1. A method of operating at least one autonomous robot to transfer a plurality of workpieces, the method comprising:
operating at least one processor in communication with the at least one autonomous robot to:
identify at least one reference workpiece type for one or more workpieces within a pre-processing area;
identify at least one set of reference operating commands associated with the at least one reference workpiece type, the at least one set of reference operating commands comprising one or more commands for increasing a number of pickable workpieces transferred to a picking area; and
define a set of actuator operating commands for one or more actuator components of the at least one autonomous robot based on an initial image showing the one or more workpieces within the pre-processing area and the at least one set of reference operating commands; and
operating the at least one autonomous robot according to the set of actuator operating commands to increase the number of pickable workpieces transferred to the picking area.

2. The method of claim 1 further comprises:
operating the at least one processor to:
identify one or more pickable workpieces from the one or more workpieces transferred to the picking area shown within a subsequent image, the subsequent image illustrating the one or more workpieces subsequent to the at least one autonomous robot being operated according to the set of actuator operating commands; and
retrieve the one or more pickable workpieces from the picking area and to transfer the one or more pickable workpieces to a receiving area.

3. The method of any one of claims 1 to 2, comprising operating the at least one processor to:
select one set of reference operating commands of the two or more sets of reference operating commands as an initial set of reference operating commands, the initial set of reference operating commands being associated with a reference workpiece type most similar to the one or more workpieces within the pre-processing area; and
adapt the initial set of reference operating commands based on each unselected set of reference operating commands of the two or more sets of reference operating commands to define the set of actuator operating commands for the one or more actuator components of the at least one autonomous robot.

4. The method of any one of claims 1 to 3, comprising operating the at least one processor to:
determine an orientation associated with each workpiece of the one or more workpieces within the pre-processing area; and
adapt the at least one set of reference operating commands associated with the at least one reference workpiece type based on the orientation associated with at least one workpiece of the one or more workpieces within the pre-processing area to define the set of actuator operating commands for the one or more actuator components of the at least one autonomous robot.

5. The method of any one of claims 1 to 44, wherein:
the at least one set of reference operating commands comprise at least one of an amplitude or a frequency of an adjusting motion of the one or more actuator components; and
the method comprises operating the at least one processor to adapt one or more of the amplitude or the frequency of the adjusting motion of the one or more actuator components of the at least one set of reference operating commands to define the set of actuator operating commands for the one or more actuator components of the at least one autonomous robot.

6. The method of any one of claims 1 to 5, comprising:
operating the at least one processor to identify each workpiece of the one or more workpieces as pickable or unpickable based on at least one of a position or an orientation of the workpiece; and/or
operating the at least one processor to:
determine a pickable workpiece density for the one or more workpieces, the pickable workpiece density being representative of a ratio of a plan view area of one or more pickable workpieces to a plan view area of the pre-processing area; and
select the one or more actuator components from a plurality of actuator components of the at least one autonomous robot based on the pickable workpiece density; and/or
operating the transfer component of the at least one autonomous robot to transfer the one or more workpieces to the pre-processing area; and/or
operating the at least one processor to:
identify at least one set of reference transfer operating commands associated with the at least one reference workpiece type, the at least one set of reference operating commands comprising one or more commands for operating the transfer component to yield a pre-determined workpiece density of workpieces on the picking area; and
define the set of transfer operating commands for the transfer component of the at least one autonomous robot based on the at least one set of reference transfer operating commands associated with the at least one reference workpiece type.

7. The method of any one of claims 1 to 6, wherein the at least one autonomous robot comprises a pre-processing robot and at least one pick-and-place robot; the pre-processing robot comprising the transfer component and the one or more actuator components; and the at least one pick-and-place robot comprising the end-of-arm-tooling component.

8. A system to transfer a plurality of workpieces, the system comprising:
at least one autonomous robot comprising a transfer component, and one or more actuator components, the transfer component operable to transfer the one or more workpieces from a pre-processing area to a picking area according to a set of transfer operating commands, the one or more actuator components operable to increase a number of pickable workpieces transferred from the pre-processing area to the picking area according to a set of actuator operating commands; and
at least one processor in communication with the at least one autonomous robot, the at least one processor operable to:
identify at least one reference workpiece type associated with the one or more workpieces within the pre-processing area;
identify at least one set of reference operating commands associated with the at least one reference workpiece type, the at least one set of reference operating commands comprising one or more commands for operating an actuator component of the at least one autonomous robot to increase the number of pickable workpieces transferred to the picking area; and
define the set of actuator operating commands for the one or more actuator components of the at least one autonomous robot based on an initial image showing the one or more workpieces within the pre-processing area and the at least one set of reference operating commands.

9. The system of claim 8, further comprising an end-of-arm-tooling component operable to retrieve one or more pickable workpieces from the picking area and to transfer the pickable workpieces to a receiving area; and
wherein the at least one processor is operable to identify one or more pickable workpieces from the one or more workpieces transferred to the picking area shown within a subsequent image, the subsequent image illustrating the one or more workpieces subsequent to the one or more actuator components being operated according to the set of actuator operating commands.

10. The system of any one of claims 8 to 9, wherein:
the at least one processor is operable to:
select one set of reference operating commands of the two or more sets of reference operating commands as an initial set of reference operating commands, the initial set of reference operating commands being associated with a reference workpiece type most similar to the one or more workpieces within the pre-processing area; and
adapt the initial set of reference operating commands based on each unselected set of reference operating commands of the two or more sets of reference operating commands to define the set of actuator operating commands for the one or more actuator components of the at least one autonomous robot.

11. The system of any one of claims 8 to 10, wherein the at least one processor is operable to:
determine an orientation associated with each workpiece of the one or more workpieces within the pre-processing area; and
adapt the at least one set of reference operating commands associated with the at least one reference workpiece type based on the orientation associated with at least one workpiece of the one or more workpieces within the pre-processing area to define the set of actuator operating commands for the one or more actuator components of the at least one autonomous robot.

12. The system of any one of claims 8 to 11, wherein:
the at least one set of reference operating commands comprise at least one of an amplitude or a frequency of an adjusting motion of the one or more actuator components; and
the at least one processor is operable to adapt one or more of the amplitude or the frequency of the adjusting motion of the one or more actuator components of the at least one set of reference operating commands to define the set of actuator operating commands for the one or more actuator components of the at least one autonomous robot.

13. The system of any one of claims 8 to 12, wherein:
the at least one processor is operable to identify each workpiece of the one or more workpieces as pickable or unpickable based on at least one of a position or an orientation of the workpiece.

14. The system of any one of claims 8 to 13, wherein the at least one processor is operable to:
determine a pickable workpiece density for the one or more workpieces, the pickable workpiece density being representative of a ratio of a plan view area of one or more pickable workpieces to a plan view area of the pre-processing area; and
select the one or more actuator components from a plurality of actuator components of the at least one autonomous robot based on the pickable workpiece density; and/or
the transfer component of the at least one autonomous robot is operable to transfer the one or more workpieces to the pre-processing area; and/or
the at least one processor is operable to:
identify at least one set of reference transfer operating commands associated with the at least one reference workpiece type, the at least one set of reference operating commands comprising one or more commands for operating the transfer component to yield a pre-determined workpiece density of workpieces on the picking area; and
define the set of transfer operating commands for the transfer component of the at least one autonomous robot based on the at least one set of reference transfer operating commands associated with the at least one reference workpiece type.

15. The method of any one of claims 8 to 14, wherein the at least one autonomous robot comprises a pre-processing robot and at least one pick-and-place robot; the pre-processing robot comprising the transfer component and the one or more actuator components; and the at least one pick-and-place robot comprising the end-of-arm-tooling component.
